# EUROPÄISCHE PATENTSCHRIFT

(11) **EP 3 189 186 B1**
(45) Veröffentlichungstag und Bekanntmachung des Hinweises auf die Patenterteilung: **27.05.2020**
(21) Anmeldenummer: 15762529.4
(22) Anmeldetag: 01.09.2015
(51) Int. Cl.: D06M 10/00, D06M 14/18, D06M 15/263, H01B 7/288

(54) **VERFAHREN ZUR HERSTELLUNG EINES TEXTILEN FLÄCHENGEBILDES ZUR VERHINDERUNG DES EINDRINGENS UND DER AUSBREITUNG VON WASSER IN KABELN**
PRODUCTION METHOD OF A TEXTILE FABRIC FOR PREVENTING THE PENETRATION AND THE SPREADING OF WATER IN CABLES
PROCÉDÉ DE FABRICATION DE STRUCTURE PLATE TEXTILE POUR EMPÊCHEMENT DE LA PÉNÉTRATION ET L'EXPANSION D'EAU EN CÂBLES

(30) Priorität: 04.09.2014 DE 102014012888
(43) Veröffentlichungstag der Anmeldung: 12.07.2017
(73) Patentinhaber: Carl Freudenberg KG, 69469 Weinheim (DE)
(72) Erfinder: KRAMER, Dominic, 60323 Frankfurt (DE); SCHNEIDER, Ulrich, 64297 Darmstadt (DE); JARRE, Gerald, 69469 Weinheim (DE); SCHUSTER, Matthias, 69469 Weinheim (DE); ZAPLATILEK, Nermina, 69488 Birkenau (DE); SUTTER, Marco, 69469 Weinheim (DE); SMITH, Iain, Watchfield Swindon SN6 8TB (GB)
(86) Internationale Anmeldenummer: PCT/EP2015/069940
(87) Internationale Veröffentlichungsnummer: WO 2016/034578

(56) Entgegenhaltungen:
- EP-A1- 0 314 991
- EP-A1- 0 500 296
- WO-A2-00/31752

## Beschreibung

### Technisches Gebiet

Die Erfindung betrifft ein Verfahren zur Herstellung eines wasserblockierenden textilen Flächengebildes.

### Stand der Technik

Kabelsysteme, beispielsweise Erdkabelsysteme, einschließlich Strom(Energie)-Kabel oder Datenkommunikations- und Telekommunikationskabel und insbesondere wassergeführte Kabelsysteme, sind sehr empfindlich gegenüber Beschädigung und Zersetzung, bei denen Wasser in den Kabelkern eindringt und sich längs der Kabel ausbreitet. Hierdurch können wesentliche Beeinträchtigungen sowie völlige Ausfälle der Funktionalität der Kabelsysteme bewirkt werden.

Viele Kabelprodukte sind zum Schutz vor dem Eindringen und der Ausbreitung von Wasser mit einer oder mehreren wasserblockierenden Schutzschichten ausgestattet. Hierzu dienen beispielsweise wasserdichte Mäntel, wasserblockierende Schichten, die zwischen einem zentralen Kern und einem Kern oder Mantel eingezogen sind, wasserblockierende Garne, wasserblockierende Bänder und Kombinationen davon. Solche wasserblockierenden Schutzeinrichtungen wirken einem Eindringen von Wasser in Richtung von Bereichen des zentralen Kerns, der z.B. Lichtleitfasern enthält, entgegen sowie einer Ausbreitung des Wassers entlang der Kabelachsen die zu einer Beschädigung weiterer Kabelabschnitte führen würde.

Schichtartige wasserblockierende Bänder weisen den Nachteil auf, dass die aktiven wasserblockierenden Verbindungen während der Kabelherstellung beispielsweise durch mechanischen Abrieb, teilweise verloren gehen können. Um dies zu verhindern sind wasserblockierende Bänder häufig mit Haftmitteln und Haftmitteln versiegelt oder gebunden. Solche Haftmittel und Haftmittel sind jedoch nachteilig, da sie die Quellwirkung und Quellgeschwindigkeit der wasserblockierenden Verbindungen hemmen und somit die Wasserblockierungseigenschaften der Bänder beeinträchtigen. Darüber hinaus erhöht der der Einsatz von Bindern das Gewicht der beschichteten Materialien. Für gewöhnlich finden wasserlösliche Binde- bzw. Haftmittel Einsatz. Das hat zur Folge, dass sich der Binder bei Wasserkontakt auflöst und die wasserblockierende Verbindung zu quellen beginnt. Das wasserblockierende Mittel verliert dadurch seine Anbindung am Substrat und kann damit bei einer Beschädigung des Kabels ausgespült werden sowie unter Wasserdruck entlang von Hohlräumen in Kabeln migrieren.

Die DE 4134370C1 beschreibt eine quellfähige Kabelbandage, bestehend aus einem Vliesstoff, der mithilfe eines Haftmittel mit pulverförmigen Superabsorber beschichtet ist. In dieser Druckschrift wird die Problematik der Pulveranbindung mithilfe eines Binders im Hinblick auf die freie Quellfähigkeit bzw. Quellhöhe für die Kabelanwendung diskutiert. Es wird ein Kompromiss aus Pulveranbindung und Quellfähigkeit vorgeschlagen.

Folglich wäre es wünschenswert ein textiles Flächengebilde zu erhalten, mit dem die Ausbreitung von Wasser in Kabeln wirksam verhindert werden kann. Das textiles Flächengebilde sollte möglichst ohne Haftmittel und/oder Haftmittel auskommt, um die Quellwirkung und Quellgeschwindigkeit zu maximieren. Ferner wäre wünschenswert, dass das textiles Flächengebilde ein geringes Gewicht und eine ausreichende Flexibilität zur Verwendung in den verschiedensten Kabelgestaltungen aufweist.

Ebenfalls bekannt ist die Verwendung von Fasern, die aus Superabsorber bestehen (SAP Fasern). Nachteilig an diesen Fasern ist jedoch, dass sie im gequollenen Zustand eine geringe Gelfestigkeit zeigen. Die SAP Fasern sind auch nicht fest in oder um die Matrixfassern gebunden. Unter hydrostatischem Druck wandert das Gel sehr schnell entlang von Hohlräumen im Kabel.

Aus der DE 000069609828 T2 ist ein wasserblockierender Verbundstoff bekannt, umfassend ein Substrat, das mit einem Gemisch aus einer strahlungspolymerisierten Verbindung und einer in Wasser quellbaren Verbindung beschichtet ist. Als Substrate werden Fasern (Glasfasern, Garne, optische Fasern), Drähte oder Stäbe (z. B. Kabelzugbeanspruchte Elemente) oder Rohre (z. B. polymere Kabelummantelungen oder Pufferhülsen) oder andere Artikel. Diese werden mit der quellbaren Verbindung versehen und dabei eine Beschichtung mit variabler Dicke ausgebildet. An der Ausbildung von Beschichtungen, wie in dieser Druckschrift beschrieben ist nachteilig, dass sich derartige Verbundstoffe nur bedingt zur Verhinderung der Ausbreitung von Wasser in in Längsrichtung entlang des Kabels eignen. Insbesondere zeigen die Verbundstoffe eine eher niedrige Quell - und damit Blockierungsgeschwindigkeit. Dazu kommt, dass durch die Auftragung der quellbaren Verbindung als Beschichtung keine feste Anbindung an das Substrat erzielt werden kann. Dies führt zu Ablösungen der quellbaren Verbindung bei der Herstellung und/oder im Einsatz, beispielsweise bei Kontakt mit Wasser.

EP 0 500 296 A1 D1 beschreibt ein Kommunikationskabel zur Verwendung in der Erde umfassend einen Kern mit mindestens einem Übertragungsmedium und einer mechanisch verstärkten, thermisch widerstandsfähigen Sperrschicht, die um ein Kunststoffrohrteil angeordnet ist. Bei der Sperrschicht sind eine metallische Abschirmung und ein Kunststoffmantel angeordnet. Die Sperrschicht kann ein Band umfassen, das aus einem Material wie gewebtem Glas oder einem Aramidfasermaterial besteht, das gegenüber relativ hohen Temperaturen beständig ist und in allen Richtungen und bei erhöhten Temperaturen geeignete Festigkeitseigenschaften aufweist und das durch Eigenschaften charakterisiert ist, die bewirken, dass die Sperrschicht den Durchgang von Partikeln, die ausreichend groß sind, um eine Beschädigung des Kerns zu bewirken, zu behindern. In einer bevorzugten Ausführungsform enthält die Wärmedämmschicht auch Vorkehrungen zum Verhindern des Längsflusses von Wasser innerhalb des Kabels. Eine solche Wasserblockierfähigkeit kann durch eine Sperrschicht erhalten werden, die ein Laminat umfasst, das ein hochtemperaturbeständiges Band und mindestens ein anderes Band mit einem superabsorbierenden Pulver dazwischen oder ein anderes Band umfasst, das mit einem (bereits polymerisierten) superabsorbierenden Material imprägniert worden ist. Es ist davon auszugehen, dass das Band eine sehr geringe Luftdurchlässigkeit aufweist, da Zweck des Imprägnierens mit dem superabsorbierenden Material ein Verhindern des Eindringens von Wasser ist.

EP 0314991 A1 beschreibt ein Kommunikationskabel mit einem Kern aus mindestens einem Übertragungsmedium und einem Kunststoffmantel. Ein imprägniertes Band ist zwischen dem Kern und dem Mantel angeordnet und um den Kern gewickelt, um eine längsüberlappende Naht zu bilden. Das Band umfasst ein Substratband, das mit einem (bereits polymerisierten) superabsorbieren Material imprägniert wird, das bei Kontakt mit Wasser anschwillt und die weitere Bewegung des Wassers hemmt. Das Substratband selbst ist porös, um zu erlauben, dass eine ausreichende Menge an Imprägnierungsmittel eindringen kann, was zu der angestrebten Wasserdichtheit führt. Nach Imprägnierung ist das Substratband jedoch nicht mehr porös sondern weist aufgrund der Imprägnierung eine filmartige Oberfläche auf. Hierdurch hat das Material eine sehr geringere Luftdurchlässigkeit, was erwünscht ist, da sie das unerwünschte Durchdringen von Wasser durch das imprägnierte Band hin zum Kern verhindert.

### Darstellung der Erfindung

Der Erfindung liegt daher die Aufgabe zugrunde, ein wasserblockierendes textiles Flächengebilde bereitszustellen, das die vorgenannten Nachteile des Stands der Technik nicht mehr aufweist. Insbesondere soll ein textiles Flächengebilde bereitgestellt werden, bei dem auf den Einsatz pulverförmiger Superabsorber sowie von Haftmitteln verzichtet werden kann und das gleichzeitig bei kostengünstiger Herstellung beim Einsatz in und/oder auf Kabeln im Schadensfall einer Ausbreitung von Wasser in in Längsrichtung entlang des Kabels wirksam entgegentreten kann.

Die vorliegende Erfindung löst die zuvor genannte Aufgabe durch die Merkmale des Patentanspruchs 1.

Danach ist das mit dem erfindungsgemäßen Verfahren hergestellte und eingangs genannte textile Flächengebilde dadurch gekennzeichnet, dass es eine Luftdurchlässigkeit, gemessen nach DIN EN ISO 9237 bei 100 Pa Luftdruck von 500 bis 3000 dm³/(m²s), besonders bevorzugt im Bereich von 800 bis 2500 dm³/(m²s) aufweist. Die

Messungen der Luftdurchlässigkeit erfolgten vor der Kontaktaufnahme mit Flüssigkeit mit Proben einer Dicke von 0,1 bis 3 mm, vorzugsweise 0,3 mm, einer luftdurchströmten Probenfläche von 20 cm², bei einer Luftdruckdifferenz von 100 Pa.

Es wurde gefunden, dass es das mit dem erfindungsgemäßen Verfahren hergestellte textile Flächengebilde - trotz seiner hohen Luftdurchlässigkeit - ermöglicht, das Eindringen und die Ausbreitung von Wasser in Richtung der Längsachse von Kabeln wirksam zu verhindern (hohe Längsdichtigkeit).

Es war für den Fachmann überraschend, dass Produkte mit einer hohen Luftdurchlässigkeit eine gute Dichtwirkung zeigen, da es naheliegend war zu diesem Zweck Produkte einzusetzen, die bereits im trockenen Zustand eine hohe Dichtigkeit haben. Die Luftdurchlässigkeit ist ein Maß für die Offenporigkeit des textilen Flächengebildes. Erfindungsgemäß wurde jedoch gefunden, dass gerade die hohe Luftdurchlässigkeit bzw. Offenporigkeit des Flächengebildes ein schnelles und vergleichsweise ungehindertes Anquellen des Absorptionmittels und mithin eine effiziente Abdichtung gegenüber Wassereintritt sowie eine Abdichtung gegenüber den Weitertransport von Wasser entlang der Längsachse des Kabels ermöglicht. Weiterhin überraschend war, dass die hohe Luftdurchlässigkeit bzw. Offenporigkeit eine besonders gute Verankerung des trockenen aber auch des gequollenen Absorptionsmedium im textilen Flächengebilde bedingt. Dies bewirkt eine besonders effektive Längsdichtigkeit, da eine Migration des gequollenen Absorptionsmediums unter äußerem Wasserdruck stark eingeschränkt wird. Wie dem Fachmann bekannt ist lässt sich die hohe Luftdurchlässigkeit des textilen Flächengebildes durch die Einstellung verschiedener Parameter, beispielsweise der Wahl eines geeigneten offenporiges Substrats, von Verfahrensparametern während des Materialauftrags, beispielsweise Viskosität, der Menge an Absorptionsmittel sowie das Durchführen einer geeigneten Nachbehandlung des Materials (Waschen und Trocknen, mechanische Nachbehandlung) einstellen.

Ohne sich erfindungsgemäß auf einen Mechanismus festzulegen, wird vermutet, dass sich erfindungsgemäß ein interpenetrierendes Netzwerk aus Fasern und vernetzten Absorptionsmittel ausbildet, das zumindest teilweise stoffschlüssig an die textile Lage angebunden und mithin auch ohne den Einsatz zusätzlicher Haftmittel fest verankert werden kann. Unter zusätzlichem Haftmittel wird ein Haftmittel verstanden, das der polymerisierbaren Mischung bei der Herstellung des textilen Flächengebildes zugesetzt wurde, beispielsweise polymere Binder wie Polyacrylate, Polyvinylalkohol, Polyvinylacetat, Polyurethane, Styrol-Butadien-Kautschuk, Nitril-Butadien-Kautschuk und/oder polymerisierbaren Comonomeren wie Vinylverbindungen. Bevorzugt ist dieses zusätzliche Haftmittel in einer Menge von unter 20 Gew.-%, vorzugsweise 0-10 Gew.-%, noch bevorzugter 0-5 Gew.-% und insbesondere bei 0-3 Gew.%, jeweils bezogen auf das Gesamtgewicht des textilen Flächengebildes vorhanden.

Grundsätzlich ist jedoch denkbar, dass das Flächengebilde ein Haftmittel aufweist. Dieses kann zur Verfestigung der Vliesstoffs vorliegen. Hierfür werden zweckmäßigerweise wasserunlösliche Bindemittel, beispielsweise Polyacrylate, Polyurethane, Styrol-Butadien-Kautschuk, Nitril-Butadien-Kautschuk eingesetzt. Aus dem Stand der Technik ist bekannt, dass für den Einsatz pulverförmiger Superabsorber zusätzlich Haftmittel für die Verankerung des Pulvers auf dem textilen Flächengebilde notwenig ist. Zweckmäßigerweise werden dazu wasserlösliche polymere Binder, beispielsweise Polyvinylalkohol eingesetzt, um die Quellbarkeit des Superabsorbers zu gewährleisten. Mit dem erfindungsgemäßen Ansatz kann auf den Einsatz eines solchen zusätzlichen Haftmittels verzichtet werden. Gemäß einer bevorzugten Ausführungsform der Erfindung enthält das mit dem erfindungsgemäßen Verfahren hergestellte Flächengebilde einen Anteil an wasserlöslichen Bindern von weniger als 20 Gew.-%, vorzugsweise 0-10 Gew.-%, noch bevorzugter 0-5 Gew.-% und insbesondere bei 0-3 Gew.%, jeweils bezogen auf das Gesamtgewicht des textilen Flächengebildes.

Praktische Versuche haben ergeben, dass das Absorptionsmittel seine hohe Festigkeit auch im nassen Zustand behält (hohe Gelfestigkeit). Es wird vermutet dass die gute Verankerung des Gels zumindest teilweise durch die hohe Luftdurchlässigkeit bzw. Offenporigkeit des textilen Flächengebildes bewirkt wird. Diese ermöglicht nämlich eine großflächige Anbindung des Absorptionsmittels. Dies ist von großem Vorteil, da unter hydrostatischem Druckkeil ein geringer Geltransport stattfindet und die Schadensstelle so räumlich auf einen kleinen Kabelabschnitt begrenzt werden kann. Zudem wurde gefunden, dass das Absorptionsmittel bei Beschädigung des Kabels nur in einem geringen Maße ausgewaschen wird.

Durch die besonders gute Abdichtungswirkung des mit dem erfindungsgemäßen Verfahren hergestellten textilen Flächengebildes kann der Materialauftrag der polymerisierbaren Mischung auch in Form flächiger Muster, beispielsweise in Form von Streifen, durch Bedrucken oder Besprühen der textilen Lage erfolgen und so der Materialeinsatz stark reduziert werden, was das Gewicht des Kables insgesamt verringert.

Im Vergleich zu Absorptionsmittel enthaltenden Beschichtungen, bewirkt die Verwendung einer porösen textilen Lage als Basismaterial folgende Vorteile: Die Polymerisation in der Lage führt zu einer vollständigen Durchdringung des Matrixmaterials, was zu einer festen Anbindung und geringem Abrieb führt.

Die textile Lage zeigt eine große Oberfläche, die entscheidend für schnelles Blockieren ist. Hierfür eignen sich insbesondere Basismaterialien die per se eine hohe Luftdurchlässigkeit bzw. Offenporigkeit aufweisen, z.B. chemisch gebundene oder wasserstrahlverfestigte Vliesstoffe. Dünne, thermisch verfestigte Vliesstoffe sind grundsätzlich ebenfalls geeignet. Sie zeigen jedoch oftmals eine eher kompakte Oberflächenstruktur, die schwer mit Absorptionsmittel versehen werden kann sodass eher eine flächige Oberflächenbeschichtung erzielt wird.

Verglichen mit dem Einsatz pulverförmiger Absorptionsmittel auf Vliesstoffen ergeben sich weitere Vorteile. So muss kein zusätzlicher polymerer Binder für die Fixierung des Pulvers eingesetzt werden, der Quellfähigkeit des Materials beeinträchtigen kann. Auf Grund der festen Einbindung des Absorptionsmittels in das Matrixmaterial muss keine Deckschicht verwendet werden, um Pulverabrieb zu vermeiden. Auf Grund der höheren Festigkeit des Absorptionsmittels wird gleichzeitig eine höhere Stabilität des Absorptionsmittels im trockenen und nassen Zustand gegenüber chemischen und thermischen Abbau erzielt. Das Einbringen von Additiven, z.B. Ruß, Faserpulp etc., in das Absorptionsmittel ist direkt bei der Herstellung möglich. Das textile Flächengebilde ist beidseitig quellfähig. Es tritt kein Gelblocking-Verhalten auf. Das Absorptionsmittel ist vielmehr frei quellfähig.

Erfindungsgemäß ist erkannt worden, dass aufgrund des stoffschlüssigen Verbindens des Absorptionsmaterials innerhalb der Lage die Aufnahmekapazität des Absorptionsmaterials beschränkt ist und die Poren sich selbstabdichtend verschließen können. Das Verschließen bzw. Selbstabdichten erfolgt derart, dass das Absorptionsmaterial aufgrund seiner Quellung die Poren vollständig oder teilweise ausfüllt und diese gegen den Durchtritt von Flüssigkeiten und/oder Gasen, vorzugsweise gegen Durchtritt von Wasser, verschließt.

Das textile Flächengebilde ist ferner gekennzeichnet durch eine Zugfestigkeit in Maschinenrichtung (MD) von mehr als 50 N/5cm. Dies ist vorteilhaft, da eine gewisse Festigkeit für den Kabelherstellungsprozess, bei dem die Materialien beispielsweise als Umwicklung aufgebracht werden, notwendig ist. Grundsätzlich können jedoch die Zugfestigkeiten in Abhängigkeit von den jeweiligen Einsatzzwecken auf bevorzugte Werte eingestellt werden, beispielsweise von 80 bis 1500 N/5cm und/oder von 100 bis 1500 N/5cm und/oder von 150 bis 800 N/5cm, gemessen nach DIN ISO 9073-3. Eine hohe Zugfestigkeit ist für eine Kabelherstellung sehr vorteilhaft, da die Materialien in der Regel unter Zugbeanspruchung beispielsweise als Umwickelung aufgebracht werden. Gemäß einer bevorzugten Ausführungsform der Erfindung weist das textile Flächengebilde die vorgenannten hohen Zugfestigkeiten in Maschinenrichtung bereits bei geringen Dicken, beispielsweise unter 3 mm wie zum Beispiel im Bereich von 0,1 mm bis 2 mm auf.

Das textile Flächengebilde kann in den verschiedensten Dickenbereichen gefertigt werden. Dies ermöglicht den Einsatz eines maßgeschneiderten textilen Flächengebildes im Hinblick auf die unterschiedlichsten Anwendungen. So kann das textile Flächengebilde beispielsweise Dicken im Bereich von 0,1 bis 3 mm, oder 0,1 bis 2 mm aufweisen. Für Anwendungen bei denen der Bauraum bzw. der vorhandene Platz begrenzt ist, darf das textile Flächengebilde nicht zu einer starken Zunahme des Kabeldurchmesser führen. In diesen Fällen sind Dicken von unter 1 mm, beispielsweise von 0,1 mm bis 0,8 mm, oder von 0,2 mm bis 0,6 mm, gemessen nach DIN ISO 9073-2, bevorzugt. In bestimmten Kabelanwendung kann das textile Flächengebilde zusätzlich die Funktion einer polsternden Lage einnehmen. Dann sind Dicken zwischen 1,0 mm und 3,0 mm, beispielsweise 1,1 bis 2,0 mm, oder 1,2 mm bis 1,8 mm bevorzugt.

Unter einem Absorptionsmaterial ist erfindungsgemäß ein quellbares, vorzugsweise flüssigkeitsquellbares, insbesondere wasserquellbares Material, zu verstehen, das vorzugsweise mindestens etwa das 10-fache, insbesondere etwa das 20-fache und vorzugsweise etwa das 30- oder Mehrfache seines Eigengewichts an Flüssigkeit aufnehmen kann. Das erfindungsgemäß verwendete Absorptionsmaterial eignet sich grundsätzlich zur Aufnahme von beliebigen Flüssigkeiten, wie insbesondere Wasser, wässrige Salzlösungen, Regenwasser, Meerwasser, Grundwasser und/oder Kondenswasser. Vorzugsweise ist das Absorptionsmaterial wasserunlöslich.

Durch das stoffschlüssige Verbinden ist das Absorptionsmaterial verliersicher in der Lage angeordnet. Vorzugsweise ist die erfindungsgemäß verwendete Lage eine textile Lage. Dies ermöglicht eine einfache Verarbeitung des textilen Flächengebildes in der Kabelproduktion.

Vorteilhafterweise ist aufgrund des stoffschlüssigen Verbindens ein einlagiger Aufbau möglich. Weiterhin vorteilhaft ist, dass das textile Flächengebilde aufgrund seines einlagigen Aufbaus besonders flexibel und beweglich ist sowie eine geringe Dicke aufweist.

Ein weiterer Vorteil ist, dass das Absorptionsmaterial die textile Lage stabilisiert und kein zusätzliches Verstärkungselement notwendig ist.

Das Absorptionsmaterial kann als Haftmittel eingesetzt werden.

Darüber hinaus ermöglicht das variable Einstellen der Menge an Absorptionsmaterial eine Regulierung der Aufnahmekapazität des textilen Flächengebildes an Flüssigkeit. Hierdurch kann ein optimales Blockierverhalten im Kabel erreicht werden und die Gewichts- und Volumenzunahme kann bei geeigneter Einstellung minimiert werden.

Vorzugsweise sind Fasern der Lage teilweise oder vollständig mit dem Absorptionsmaterial beschichtet. Hierdurch wird das Absorptionsmaterial als festhaftende Schicht auf die Oberfläche der Fasern aufgebracht. Bei einer Beschichtung kann es sich um eine dünne oder dicke Schicht handeln, die die Faser durchgängig und zusammenhängend umgibt bzw. einhüllt. Dies ermöglicht eine gute Adhäsion zwischen Absorptionsmaterial und den Fasern der Lage. Ferner kann die Dicke der Schicht aus Absorptionsmaterial optimal eingestellt werden.

Von der Beschichtung der einzelnen Fasern zu differenzieren ist die Ausbildung einer Beschichtung auf der Oberfläche des Flächengebildes selbst. Die Ausbildung einer derartigen Beschichtung ist erfindungsgemäß nämlich dann wenig zweckmäßig, wenn hierdurch die Luftdurchlässigkeit bzw. Offenporigkeit des Flächengebildes unter das erfindungsgemäß erwünschte Maß reduziert wird. Wie oben diskutiert wirkt sich dies nämlich nachteilig auf das Quellverhalten des Absorptionsmittels aus.

Folglich ist die eingangs genannte Aufgabe gelöst.

Das Absorptionsmaterial könnte bedeckungsfrei vorliegen, das heißt, dass das Absorptionsmaterial nicht von einer Abdecklage bedeckt bzw. umgeben ist. Dies ermöglicht eine schnelle Flüssigkeitsaufnahme, da ein Passieren der Flüssigkeit durch die Träger- bzw. Abdecklage entfällt.

Das erfindungsgemäß eingesetzte Absorptionsmaterial ist in der Lage bei Kontakt mit Flüssigkeit die Poren aufgrund einer Formänderung, insbesondere einer Quellung und Volumenzunahme, zu verschließen.

Die textile Lage könnte als Vlies, Vliesstoff, Gewebe, Gestricke, und / oder Gelege ausgestaltet sein. Hierdurch wird ein textiles Flächengebilde mit einem besonders flachen Aufbau erhalten und das textile Flächengebilde ist leicht deformierbar. Dies erleichtert eine weitere Verarbeitung des textilen Flächengebildes.

Erfindungsgemäß bevorzugt wird ein Vliesstoff eingesetzt. Die Vlieslegung kann trocken in einem Kardierprozess oder in einem Nassvliesprozess erfolgen. Vorzugsweise findet das Vlieslegen derart statt, dass im Vlies ein höherer Anteil der Fasern in Längsrichtung (Maschinenrichtung) als in Querrichtung orientiert ist (längs gelegtes Vlies). Dies ist vorteilhaft, da höhere Zugfestigkeiten in Längsrichtung erzielt werden können. Zur Erhöhung der Zugfestigkeiten könnten alternativ oder zusätzlich auch Verstärkungsfäden in Längsrichtung mit eingearbeitet werden. Die Verfestigung könnte mechanisch, chemisch und/oder thermisch erfolgen. Ein mechanisches Verfestigen kann mittels Nadeltechnik oder durch ein Verschlingen von Fasern der Lage mittels Wasserstrahlen und/oder Luft erfolgen. Für Kabelanwendungen werden Vliesstoffe geringer Dicke und hoher Zugfestigkeit benötigt. Eine Verfestigung mittels Nadeltechnik erscheint für den erfindungsgemäßen Einsatz in Kabelprodukten deshalb eher von Nachteil.

Bei chemisch gebundenen Vliesstoffen könnte ein Faserflor durch Imprägnieren, Besprühen oder mittels sonst üblicher Auftragsmethoden mit einem Haftmittel oder mit der zur Herstellung des textilen Flächengebildes eingesetzten Mischung versehen werden. Hierdurch kann ein ausreichend festes Produkt mit einer hohen Zugfestigkeit hergestellt werden, was für den erfindungsgemäßen Einsatz in Kabelprodukten von Vorteil ist.

Gemäß einer bevorzugten Ausführungsform enthält die textile Lage Fasern, ausgewählt aus der Gruppe bestehend aus: Polyolefinen-, insbesondere Polyphenylensulfid-, Polyester-, insbesondere Polyethylenterephthalat-, Polybutylenterephthalat-; Polyamid-, insbesondere Polyamid 6.6 (Nylon®)-, Polyamid 6.0 (Perlon®)-; Polyvinylchlorid-, Polyacrylnitril-, Polyimid-, Polytetrafluorethylen (Teflon®)-, Aramid-, Woll-, Baumwoll-, Seide-, Hanf-, Bambus-, Kenaf-, Sisal-, Cellulose-, Soja-, Flacks-, Glas-, Basalt-, Carbon-, Viskosefasern und deren Gemischen.

Besonders bevorzugt enthält die textile Lage Fasern, ausgewählt aus der Gruppe bestehend aus: Polyethylen-, Polypropylen-, Polyamid-, Poly-p-phenylenterephthalamid-, Poly-m-phenylenterephthalamid-, Polyester-Baumwoll-, Viskosefasern und deren Gemischen. Auf Grund seiner guten mechanischen Eigenschaften, thermischen Beständigkeit und Kostengünstigkeit ist Polyester und dabei insbesondere Polyethylenterephthalat erfindungsgemäß besonders bevorzugt.

Erfindungsgemäß weist die textile Poren auf. Die Poren könnten durch in der Lage, speziell aufgrund der Faserstruktur, vorhandene Poren gebildet werden. Erfindungsgemäß weist das textile Flächengebilde eine Porosität gem. ISO 8971-4 im Bereich von 50 bis 95 %, insbesondere im Bereich von 80 bis 90 %. Vorzugsweise weist das Flächengebilde eine Porenverteilung auf, mit einem kleinsten Porendurchmesser von 2 bis 20 Mikrometer und/oder einem mittleren Porendurchmesser von 10 bis 150 Mikrometer und/oder einem größten Porendurchmesser von 50 bis 500 Mikrometer, gemessen nach ASTM E 1294-89, mit Galden als Messflüssigkeit und mit Hilfe eines Capillary Flow Porometer CFP-1200-AEXL.

Weiterhin denkbar ist, dass die Poren durch das Formen von Aussparungen und/oder Durchgängen eingebracht werden können. Durch die Poren kann sich das Absorptionsmaterial nach Flüssigkeitsaufnahme entsprechend der Geometrie der Poren räumlich begrenzt ausdehnen und die Gewichts- und Volumenzunahme des textilen Flächengebildes kann variiert werden.

Die Poren könnten statistisch verteilt sein. Dies ermöglicht eine schnelle Flüssigkeitsaufnahme in der Lage. Vorzugsweise findet eine lokale Flüssigkeitsaufnahme innerhalb der Lüftungsöffnung direkt am Eindringungsort der Flüssigkeit statt.

Ferner könnten die Poren einen regelosen geometrischen Aufbau aufweisen. Hierbei treten Kapillareffekte auf, die zu einer sehr schnellen Flüssigkeitsaufnahme in der Lage führen.

Das Flächengewicht kann in weiten Bereichen schwanken. Bevorzugt weist das textile Flächengebilde ein Flächengewicht gemäß DIN EN 29073-1 von 20 bis 400 g/m², vorzugsweise von 20 bis 300 g/m², insbesondere von 30 bis 250 g/m² auf. Flächengebilde mit solchen Flächengewichten verfügen über eine hervorragende Stabilität.

Das textile Flächengebilde könnte keine zusätzlich eingebrachten hydrophilen Fasern, beispielsweise basierend auf Polyvinylalkohol, Polyacrylsäure, Polyvinylacetat, Cellulose aufweisen. Der Anteil an hydrophilen zusätzlich eingebrachten Fasern bezogen auf das Gesamtgewicht des textilen Flächengebildes könnte weniger als 100 Gew.-%, vorzugsweise weniger als 50 Gew.-% , besonders bevorzugt weniger als 25 Gew.-% , insbesondere 0 Gew.-% betragen.

Das textile Flächengebilde kann als solches als Abdichtelement in und/oder um Kabel eingesetzt werden. Für manche Anwendungszwecke kann es jedoch vorteilhaft sein, das Flächengebilde als Verbundwerkstoff, beispielsweise als Laminat in Verbindung mit Stütz- und/oder Schutzschichten in Form von Textilien, Folien, Papieren, auszubilden.

Die Erfindung umfasst auch ein Verfahren zur Herstellung des textilen Flächengebildes, umfassend die folgenden Verfahrenschritte:
a) Behandeln einer Poren aufweisenden Lage mit einer Mischung, enthaltend ein polymerisierbares Monomer oder Oligomer und einen Vernetzer, als Vorstufe für ein Absorptionsmaterial, ein Benetzungsmittel und einen Initiator und
b) Polymerisation des Monomers oder Oligomers zu dem Absorptionsmaterial unter Ausbildung einer zumindest teilweise stoffschlüssigen Verbindung zwischen dem Absorptionsmaterial und der Lage.

Überraschend wurde festgestellt, dass durch die Verwendung eines Benetzungsmittels eine Oberflächenspannung der Mischung derart beeinflusst wird, dass ein stoffschlüssiges Verbinden des Absorptionsmaterials mit der Lage erfolgt und das Absorptionsmaterial verliersicher mit der Lage verbunden wird. Gleichzeitig wird das textile Flächengebilde mit einer hohen Luftdurchlässigkeit bzw. Offenporigkeit versehen. Wie oben bereits dargelegt führt diese hohe Luftdurchlässigkeit bzw. Offenporigkeit zu einer guten Verankerung des Absorptionsmittels sowohl im trockenen als auch im nassen und damit gequollenen Zustand, was zu einem überraschend effektiven Blockieren des Wasserweitertransports in Längsrichtung des Kabels führt.

Vorteilhafterweise ist zum Verbinden des Absorptionsmaterials mit der Lage die Verwendung eines Klebers, Haftmittels und/oder Haftvermittlers nicht nötig. Infolgedessen kann auf einen zusätzlichen Verfahrensschritt, nämlich einer Fixierung des Absorptionsmaterials mit der Lage verzichtet werden. Auch eine thermische Fixierung des Absorptionsmaterials mit der Lage ist nicht nötig.

Mit dem erfindungsgemäßen Verfahren kann das Absorptionsmaterial direkt in die textile Lage eingebracht und mit dieser verbunden werden. Hierdurch erfolgen eine gezielte Steuerung der Flüssigkeitsaufnahme und Quellung des Absorptionsmaterials sowie ein selbstdichtendes Verschließen der Poren innerhalb der Lage.

Ein weiterer Vorteil des erfindungsgemäßen Verfahrens ist, dass aufgrund der Polymerisation das Absorptionsmaterial eine gute Haftung innerhalb der Lage aufweist und sich der nach dem Verfahren hergestellte textilen Flächengebildes durch eine erhöhte Abriebbeständigkeit auszeichnet.

Erfindungsgemäß sind unter einem Benetzungsmittel natürliche oder synthetische Stoffe zu verstehen, die in Lösung oder in Mischungen Oberflächenspannungen von Wasser oder anderen Flüssigkeiten herabsetzen, so dass diese besser in Oberflächen fester Körper, wie die Lage, eindringen und sie unter Verdrängung von Luft durchtränken und benetzen können.

Bevorzugt wird ein Benetzungsmittel ausgewählt aus der Gruppe bestehend aus: Glycerin, Propylenglykol, Sorbitol, Trihydroxystearin, Phenol, Säureharz, Phospholipide, Ethylenoxid/Fett-Alkoholether, Ethoxylaten des Propylenoxid mit Propylenglykol, Ester des Sorbitols und des Glycerins und deren Gemischen.

Besonders bevorzugt wird als Benetzungsmittel eine Verbindung der folgenden Formel

RO(CH₂CH₂O)ₓH,

verwendet, wobei R ein linearer oder verzweigter Alkylrest ist und wobei x= 4; 5; 6,3; 6,5; 7; 8; 9; 10 oder 11 ist, vorzugsweise 6.5; 7; 8; 9; 10, insbesondere 6.5; 7; 8; 9. Praktische Versuche haben gezeigt, dass bei der Verwendung eines derartigen Benetzungsmittels die Oberflächenspannung der Mischung besonders effektiv herabgesetzt wird, wodurch das Eindringen der Mischung in die textile Lage erleichtert wird. Dies führt zu einer ausgezeichneten Haftung zwischen dem Absorptionsmaterials und der Lage.

Ein Alkylrest ist erfindungsgemäß eine gesättigte aliphatische Kohlenwasserstoffgruppe mit 1 bis 30, vorzugsweise 3 bis 20, noch bevorzugter 4 bis 17 und insbesondere 6 bis 11 Kohlenstoffatomen. Eine Alkylgruppe kann linear oder verzweigt sein und ist wahlweise mit einem oder mehreren aliphatischen, insbesondere gesättigten, Kohlenwasserstoffgruppen mit 1 bis 4 Kohlenwasserstoffen substituiert.

Praktische Versuche haben gezeigt, dass bei einem Anteil des Benetzungsmittels bezogen auf die Gesamtmenge der Mischung im Bereich von 0,1 bis 5 Gew.-%, vorzugsweise von 1 bis 4 Gew.-%, insbesondere von 1,5 bis 3,5 Gew.-% eine besonders gleichmäßige und homogene Benetzung der Lage erfolgt.

Besonders gute Ergebnisse bzgl. der Benetzung der Lage wurden erzielt bei Zugabe eines Benetzungsmittels, das eine Oberflächenspannung gemäß DIN 55660 der Mischung im Bereich von 10 bis 72 dyn einstellt, vorzugsweise im Bereich von 15 bis 60 dyn, insbesondere im Bereich von 20 bis 68 dyn.

Vernetzung umfasst Reaktionen, bei denen eine Vielzahl einzelner Makromoleküle zu einem dreidimensionalen Netzwerk verknüpft werden. Die Verknüpfung kann entweder direkt beim Aufbau der Makromoleküle oder durch Reaktionen an bereits bestehenden Polymeren erreicht werden.

Durch den Prozess der Vernetzung können sich die Eigenschaften der vernetzten Stoffe verändern. Die Veränderung nimmt mit steigendem Vernetzungsgrad zu. Bei dem Vernetzungsgrad handelt es sich um ein quantitatives Maß zur Charakterisierung von polymeren Netzwerken. Der Vernetzungsgrad wird berechnet als Quotient aus einer Molzahl vernetzter Grundbausteine und einer Molzahl insgesamt vorhandener Grundbausteine im makromolekularen Netzwerk. Er wird entweder als dimensionslose Zahl oder in Prozent (Stoffmengenanteil) angegeben.

Der erfindungsgemäß eingesetzte Vernetzer verbindet bzw. vernetzt die Monomere bzw. Oligomere stellenweise untereinander durch chemische Brücken. Diese Brückenbildung kann die Wasserunlöslichkeit des Absorptionsmaterials verringern. Beim Eindringen von Flüssigkeit in das Absorptionsmaterial quillt dieses auf und strafft auf molekularer Ebene dieses Netzwerk - die Poren schließen sich selbstdichtend ab. Somit kann ein Durchdringen bzw. Passieren von Flüssigkeit durch die Poren verhindert werden.

Der bei dem erfindungsgemäßen Verfahren verwendete Vernetzer weist vorteilhafterweise mindestens zwei reaktive funktionelle Gruppen auf, die mit funktionellen Gruppen der polymerisierbaren Monomere oder Oligomere während der Polymerisation reagieren können.

Vorteilhafterweise weist der Vernetzer mindestens eine Olefin-, Carboxyl-, und/oder Carboxylatgruppe auf. Vorzugsweise sind die Vernetzer ausgewählt aus der Gruppe bestehend aus:
Ethylenglykolbisacrylat, Diethylenglykoldimethacrylat, Polyethylenglykoldimethacrylat, Propylenglykoldimethacrylat, Polypropylenglykoldimethacrylat, Tetramethylolmethantrimethacrylat, N-Methylolacrylamid, Glycerintrimethacrylat, Glycidylmethacrylat, N,N'-Methylenbismethacrylamid, Diallylmaleat, Diallylphthalat, Diallylterephthalat, Triallylcyanurat, Triallylisocyanurat, Triallylphosphat, Dipentaerythritolhexaacrylat, Polyethylenglykoldiglycidylether, Di- oder Polyglycidylether von aliphatischen, polyvalenten Alkoholen, Ethylenglykolglycidylether, Myrcene und deren Gemischen.

Besonders bevorzugte Vernetzer sind Triethylenglykoldimethacrylat, Ethylendimethacrylat, 1,1,1-Trimethylpropantriacrylat, 1,3,5-Tri-allyl-1,3,5-triazin-2,4,6(1H,3H, 5H)-trion, 1,3-Butandioldimethacrylat, 1,4-Butandioldimethacrylat, Ethylenglykoldimethacrylat, Trimethylolpropantrimethacrylat, N,N'-Methylendiacrylamid und deren Gemischen. Diese Vernetzer eignen sich besonders zu einer gezielten Steuerung der Aufnahmekapazität des Absorptionsmaterials, so dass zum Verschließen der Poren nur eine geringe Flüssigkeitsaufnahme notwendig ist.

Bevorzugt wird ein Vernetzungsgrad im Bereich von 4,7^{∗}10⁻⁵ bis 1,9^{∗}10⁻¹, vorzugsweise von 2,3^{∗}10⁻⁴ bis 1,3^{∗}10⁻¹, insbesondere von 4,7^{∗}10⁻⁴ bis 4,9^{∗}10⁻², eingestellt. Durch einen hohen Vernetzungsgrad ist die Aufnahmekapazität des Absorptionsmaterials beschränkt und die Poren werden bei geringer Flüssigkeitsaufnahme verschlossen.
Gemäß einer bevorzugten Ausführungsform der Erfindung beträgt der Anteil des Vernetzers bezogen auf die Gesamtmenge des Monomeranteils 0,01 bis 40,00 Gew.-%, vorzugsweise 0,05 bis 28,00 Gew.-%, insbesondere 0,10 bis 20,00 Gew.-%. Bei einem solchen Anteil des Vernetzers ist die Aufnahmekapazität des Absorptionsmaterials hoch genug um die Poren bei Kontakt mit einer Flüssigkeit optimal und möglichst schnell verschließen zu können.

Gemäß einer weiteren bevorzugten Ausführungsform ist das polymerisierbare Monomer oder Oligomer ausgewählt aus der Gruppe bestehend aus: monoethylenisch ungesättigte Mono-Carbonsäuren, insbesondere Acrylsäure, Methacrylsäure, Maleinsäure, Fumarsäure; Crotonsäure, Sorbinsäure, Itaconsäure, Zimtsäure; monoethylenisch ungesättigte Polycarbonsäureanhydride, insbesondere Maleinsäureanhydrid; Carbonsäuresalze, vorzugsweise wasserlösliche Salze, insbesondere Alkali-, Ammonium- oder Aminsalze; monoethylenisch ungesättigte Mono- oder Polycarbonsäuren, insbesondere Natriummeth-, Trimethylaminmeth-, Triethanolaminmeth-, Natriummaleat, Methylaminmaleat; Sulfonsäuren, vorzugsweise aliphatische oder aromatische Vinylsulfonsäuren, insbesondere Vinyl-, Allyl-, Vinyltoluol-, Styrol-, Methacrylsulfonsäuren; 2-Hydroxy-3-methacryloxypropylsulfonsäure; Sulfopropylmethacrylat, Sulfonsäuresalze, vorzugsweise Alkali-, Ammonium-, Aminsalze von sulfonsäuregruppenhaltigen Monomeren oder Oligomeren; Hydroxyverbindungen, vorzugsweise monoethylenisch ungesättigte Alkohole, monoethylenisch ungesättigte Ether oder Ester von Polyolen, insbesondere Methallylalkohol, Alkylenglykolen, Glycerin, Polyoxyalkylenpolyolen, Hydroxyethylmethacrylat, Hydroxypropylmethacrylat, Triethylenglykolmethacrylat, Polyoxyethylenoxypropylenglykolmonomethallylether, wobei die Hydroxygruppen gegebenenfalls etherifiziert oder esterifiziert sind; Amide, vorzugsweise monoethylenisch ungesättigte, Vinylform-, Acryl-, Methacryl-, N-Alkylmeth-, N,N-Dialkylmethacryl-, N-Hydroxyalkylmethacryl-, N-Hexylacryl-, N,N-Dimethylacryl-, N,N'-Di-n-propylacryl-, N-Methylolmethacryl-, N-Hydroxyethylmethacryl-, N,N-Dihydroxyethylmethacrylamid, Vinyllactame, insbesondere N-Vinylpyrrolidon; Aminoverbindungen, vorzugsweise aminogruppenhaltige Ester, monoethylenisch ungesättigter Mono- oder Dicarbonsäuren, heterocyclische Vinylverbindungen, insbesondere Dialkylaminoalkyl-, Dihydroxyalkylaminoalkyl-, Morpholinoalkylester; Vinylpyridine, insbesondere 2-Vinyl-, 4-Vinyl-, N-Vinylpyridin, N-Vinylimidazol; quartäre Ammoniumsalze, vorzugsweise N,N,N-Trialkyl-N-methacryloyloxyalkylammoniumsalze, insbesondere N,N,N-Trimethyl-N-methacryloyloxyethylammoniumchlorid, N,N,N-Triethyl-N-methacryloyloxyethylammoniumchlorid, 2-Hydroxy-3-methacryloyloxypropyltrimethylammoniumchlorid, insbesondere Dimethylaminoethylmethacrylat, Diethylaminoethylmethacrylat, Morpholinoethylmethacrylat, Dimethylaminoethylfumarat und deren Gemischen. Erfindungsgemäß bevorzugt werden Acrylsäure, Methacrylsäure, Amide und Vinylsufonsäuren und deren Gemische.

Vorteilhafterweise beträgt der Anteil des Monomers oder Oligomers bezogen auf die Gesamtmenge der Mischung 3 bis 80, vorzugsweise 5 bis 70 Gew.-%, insbesondere 10 bis 50 Gew.-%. Praktische Versuche haben ergeben, dass bei diesem Monomer- bzw. Oligomeranteil die Aufnahmekapazität des Absorptionsmaterials, insbesondere von Wasser, ausreichend hoch ist und das textile Flächengebilde besonders stabil ist.

Als Initiatoren werden erfindungsgemäß Stoffe bezeichnet, die der Mischung, enthaltend Monomere bzw. Oligomere und Benetzungsmittel, zugegeben werden, um die gewünschte Polymerisation zu ermöglichen und zu starten, bzw. zu initiieren.

Zweckmäßigerweise werden als Initiatoren wasserlösliche Azoverbindungen; Redoxsysteme; Peroxycarbonsäuren; Peroxycarbonsäureester; Thioxanthen; Thioamine; Ketonperoxide; Hydroperoxide; Dicarbonate; Oxalate; Nitrile, vorzugsweise Valeronitrile; Anisoine; Benzophenone; Acetophenone; Antrachinone; Benzolchromtricarbonyle; Benzoine; Benzoinether; Benzile; Benzilketale; 4-Benzoylbiphenyle; Phenylpropandiole; Cyclopentadienyleisen(II)-cumen-hexafluorophosphate; 10,11-Dihydro-5H-dibenzo[a,d]cyclohepten-5-one; Diphenyl(2,4,6-Trimethylbenzoyl)phospinoxide; 2-Hydroxy-2-methylpropiophenone; 4'-Ethoxyacetophenone; Ethylanthrachinone; 1-Hydroxycyclohexylphenylketone, 2-Methyl-4'-(methylthio)-2-morpholinopropiophenone, Phenanthrenchinone, 4-Phenoxyacetophenone; Triarylsulfoniumhexafluorantimonate in Propylencarbonat; Triarylsulfoniumhexafluorophosphat-Salze in Propylencarbonat; α-Hydroxyketone; Phenylglyoxylate; Benzyldimethylketale; α-Aminoketone; 2,5-Dimethyl-2,5-dihydroperoxy-hexan; 1,3-Di-(2-hydroxyperoxyisopropyl)-benzol; Monoacylphosphine; Bisacylphosphine; Phosphinoxide; Metalloccene; Peroxide; Persulfate; Permanganate; Chlorite; Cersalze; lodsalze und/oder Hypochlorite eingesetzt; vorzugsweise 2,2'-Azobis[2-(2-imidazolin-2-yl)propandihydrochlorid; Azobis(2-Amidinopropan)dihydrochlorid); Azo-bis-cyanopentansäure; 4-Benzoyl-N,N,N-trimethylbenzolmethanaminiumchlorid; 2-Hydroxy-3-(4-benzoylphenoxy)-3-N,N,N-trimethyl-1-propanaminiumchloridmonohydrat; 2-Hydroxy-3-(3,4-dimethyl-9-oxo-9H-thioxanthon-2-yloxy)-N,N,N-trimethyl-1-propanamiumiumchlorid; 2-Hydroxy-1-[4-(hydroxyethoxy)phenyl]-2-methyl-1-propanon; 2-Hydroxy-2-methyl-1-phenylpropan-1-on; 4-Benzoyl-N,N-dimethyl-N-[2-(1-oxo-2-propenly)oxy]ethylbenzolmethanaminiumchlorid; 1-[4-(2-Hydroxyethoxy)-phenyl]-2-hydroxy-2-methyl-1-propan-1-on; 2,2'-Azobis(4-Methoxy-2,4-dimthylvaleronitril); Antrachinon-2-sulfonsäure Natriummonohydrate; Bis(2,4,6-trimethylbenzoyl)-phenylphosphinoxide; Dibenzenchrom; Benzoamine; Benzoinethylether; Benzoinmethylether; Benzoinisobutylether; 3,3',4,4'-Benzophenontetracarboxyldianhydrid; 4-Phenylbenzophenon; 2-Benzyl-2-(dimethylamino)-4'-morpholinobutyrophenon; 4,4'-Bis(diethylamino)benzophenon; 4,4'-Bis(dimethylamino)benzophenon, 4,4'Dimethylbenzil; 2,5-Dimethylbenzophenon; 3,4-Dimethylbenzophenon; 3'-Hydroxyacetophenon; 4'-Hydroxyacetophenon, 3-Hydroxybenzophenon; α, α-Dimethoxy-α-phenylacetophenon; 4-Hydroxybenzophenon; 2-Methylbenzophenon; Dialkoxyacetophenone; α-Hydroxyalklyphenone; α-Aminoalkylphenon; 4,4'-Dihydroxybenzophenone; 2,2-Dimethoxy-2-phenylacetophenon; 4-(Dimethylamino)benzophenon, 3-Methylbenzophenon, 1-Hydroxycyclohexylphenylketon; 2-Hydroxy-2-methylpropiophenon; 2-Hydroxy-2-methyl-propiophenon; 4-Dimethylaminobenophenon; 2,2-Diethoxy-2-phenyllacetophenon; 2,2-Diethoxyacetophenon; Methylbenzoylformat; Oxy-phenyl-essigsäure-2-[2-oxo-2-phenyl-acetoxy-ethoxy]-ethylester; Oxy-phenyl-acrylat-2-[2-hydroxy-ethoxy]-ethylester; 2-Chlorthioxanthen-9-one; 2-Benzyl-2-(dimehylamino)-1-[4-(4-morpholinyl)phenyl]-1-butanon; 2-Methyl-1-[4-(4-morpholinyl)phenyl]-1-propanon; Diphenyl-(2,4,6-trimethylbenzoyl)-phosphinoxid; Phenyl-bis-(2,4,6-Trimethyl)-benzoyl-phospinoxid; Ferrocen; Titanocen; Bis-η⁵-2,4-cylopentadien-1-yl)-bis-[2,6-difluoro-3-(1H-pyrro-1-yl)-phenyl]titan; (4-methylphenyl)-[4-(2-methylpropyl-(4-methylphenyl)-[4-(2-methylproplyl)phenyl]-iodoniumhexafluorophosphat; Ammoniumpersulfat; Kaliumpersulfat; Kampferchinon; Cumolcyclopentadienyleisenhexafluorophosphat; Dibenzocycloheptadienon; Hydroxyacetophenone; Thioxanthen-9-one; 4,4'-Dimethylbenzil; 2-Ethylanthrachinon; Acrylphosphinoxid; 2-Methylbenzoylformat; Didecanoylperoxid; Dilaurylperoxid; Dibenzoylperoxid; Di-(2-ethyl)-peroxidicarbonat; Dicylohexylperoxidicarbonat; Di-(4-tert.-butyl)-cylcohexylperoxidicarbonat; Diacetylperoxodicarbonat; Dimyristylperoxodicarbonat; Di-tert-butylperoxyoxalat; 2,2-Azobis(2,4-dimethylvaleronitril); 2,2-Azobis(4-methoxy-2,4-dimethylvaleronitril); 2,2'-Azobis(2-methylbutyronitril); 2,2'-Azobis(N-(2-propenyl)-2methylpropionamid; Dimethyl-2,-2'-Azobis(2-methylpropionat); Dimethyl-2,2'-azoisobutyrat; 1-Hydroxy-cyclohexylphenylketone; Peroxycarbonsäureester, hergestellt aus Pivalinsäure, Neodecansäure, 2-Ethylhexansäure, tert-Butylhydroperoxid, tert.-Amylhydroperoxid und/oder Cumolhydroxid; tert.-Amylhydroperoxid; Cumolhydroperoxid; Diacylperoxid; Wasserstoffperoxid; 2-Di(3,5,5-trimethylhexenoyl)peroxid; Hydroxy- und/oder tert.-Butylperoxid, insbesondere Bis(2,4,6-trimethylbenzoyl)-phenylphosphinoxide, 1-Hydroxycyclohexylphenylketone, Benzophenone und/oder 1-□4-(2-Hydroxyethoxy)-phenyl]-2-hydroxy-2-methyl-1-propan-1-one.
Der Anteil des Initiators bezogen auf die Gesamtmenge der Mischung könnte im Bereich von 0,1 bis 3 Gew.-%, vorzugsweise von 0,5 bis 2 Gew.-%, insbesondere von 0,7 bis 1,5 Gew.-%, liegen.

Je nach Anwendungsgebiet könnte die Mischung einen Füllstoff enthalten. Füllstoffe erhöhen das Volumen oder Gewicht und können die technischen Eigenschaften der Mischung verbessern. Bevorzugt ist der Füllstoff ausgewählt aus der Gruppe bestehend aus: Carbonate, insbesondere Calciumcarbonat, Ruße, insbesondere Leitruß, Graphit, lonenaustauscherharze, Aktivkohle, Silicate, insbesondere Talk, Ton, Glimmer, Kieselerde, Zeolithe, Kreide, Calcium- und Bariumsulfat, Aluminiumhydroxid, Glasfasern und -kugeln sowie Holzmehl, Cellulose-Pulver, Perlit, Kork- oder Kunststoffgranulat, gemahlene Thermoplasten, Baumwolle-, Carbonfasern, insbesondere gemahlene Carbonfasern und deren Gemischen. Durch die Zugabe eines Füllstoffs kann die Durchlässigkeit für Flüssigkeit und/oder Luft verändert sowie die thermische und/oder elektrische Leitfähigkeit des Materials gesteuert werden. Darüber hinaus könnte die Mischung Desinfektionsmittel, Antioxidantien, Comonomere, Korrosionsschutzmittel, insbesondere Triazole und/oder Benzimidazole, Verdicker, Schaumhilfsmittel, Entschäumer, Duft- und/oder Wirkstoffe enthalten.
Durch die in Verfahrensschritt b) aus den Monomeren bzw. Oligomeren durchgeführte Polymerisation könnte ein Superabsorber gebildet werden. Superabsorber zeichnen sich dadurch aus, dass sie Flüssigkeit hervorragend binden und aufnehmen können. Erfindungsgemäß wird unter einem Superabsorber ein Polymer verstanden, das in der Lage ist, ein Vielfaches seines Eigengewichts - bis zum 500-fachen - an Flüssigkeiten, vorzugsweise Wasser, aufzusaugen bzw. aufzunehmen, wobei es an Volumen zunimmt. Zur Bildung der Mischung wird das Monomer bzw. Oligomer, vorzugsweise in einer wässrigen Lösung, gelöst oder emulgiert. Der Wassergehalt in der Mischung könnte im Bereich von 20 bis 90 Gew.-%, vorzugsweise im Bereich von 30 bis 80 Gew.-%, jeweils bezogen auf die Gesamtmenge der Mischung, liegen. Wenn der Vernetzer nicht löslich ist, kann er in emulgierter Form zugesetzt werden. Zusätzlich kann ein mit Wasser mischbares organisches Lösungsmittel zum Lösen oder Dispergieren des Vernetzens zugefügt werden. Anschließend könnten das Benetzungsmittel und der Initiator zugegeben werden.

Die Polymerisation findet bevorzugt im sauren pH-Bereich von 3 bis 6, insbesondere von 4,3 bis 5,5, statt. Unter diesen Bedingungen ist die Mischung besonders stabil.

Zum Neutralisieren des Acrylsäuremonomers bzw. der oben erwähnten sauren Monomere oder Oligomere könnte ein Hydroxid, bevorzugt ein Alkalimethallhydroxid, insbesondere Natrium-, Kalium- oder Lithiumhydroxid, Carbonat eines Alkalimetalls und/oder Ammoniumhydroxid verwendet werden. Natrium- oder Kaliumhydroxid werden aufgrund ihrer kommerziellen Verfügbarkeit, ihres Preises und ihrer Sicherheit besonders bevorzugt eingesetzt.

Das Behandeln der Lage mit der Mischung könnte durch Imprägnieren, Bedrucken, Beschichten und/oder Sprühen erfolgen. Wesentlich bei der Auswahl der Auftragsmethode und Einstellung der jeweiligen Verfahrensparameter ist, dass mit ihr die erfindungsgemäss einzustellende Luftdurchlässigkeit bzw. Offenporigkeit realisiert werden kann. Übliche Beschichtungsverfahren sind das Rakeln und das Kisscoating.Beim Rakeln arbeitet üblicherweise ein Streichmesser gegen eine Unterlage, Walze, Tisch oder das Substrat selbst. Unter einer Rakel wird eine Streichvorrichtung verstanden. Diese könnte über die Gesamtbreite der Warenbahn fixiert werden. Das Auftragen der Mischung kann mit den folgenden Streichmessern (Rakeln) Walzenrakel, Luftrakel, Gummituchrakel, Stützrakel, Tischrakel, Spiralrakel und/oder Kastenrakel erfolgen. Beim Kisscoating wird üblicherweise eine Druckwalze mit glatter Oberfläche oder mit geätzten, maschinell bearbeiteten oder gerändelten Vertiefungen auf der Oberfläche verwendet. Die Mischung könnte von der Druckwalze auf das zu beschichtende Flächengebilde übertragen werden. Die Vertiefungen können jede beliebige Größe oder Form haben und diskontinuierlich oder kontinuierlich auf der Oberfläche der Druckwalze verteilt sein.

Das Aufbringen der Mischung mittels Imprägnieren ist besonders bevorzugt, insbesondere mittels Foulardieren oder mittels Schaumimprägnierung. Das Foulardieren kann einstufig oder mehrstufig durchgeführt werden, wobei eine definierte Mischung gleichmäßig je m² Textilgut aufgebracht wird. Beim Foulardieren wird eine Flotte durch Walzendruck in ein textiles Flächengebilde gepresst. Der Begriff Flotte bezeichnet dabei die Gesamtheit aller ihrer Komponenten, das heißt das Lösungsmittel, vorzugsweise Wasser, sowie alle darin enthaltenen gelösten, emulgierten oder dispergierten Bestandteile wie Farbstoffe, Partikel, Pigmente, Chemikalien und Hilfsmittel.

Die Auftragsmenge der Mischung zum Imprägnieren, Beschichten oder Sprühen der Lage kann in weiten Bereich variieren. Üblicherweise werden Mengen im Bereich von 10 bis 2500 g/m², insbesondere von 50 bis 1200 g/m², in das Fasergebilde der Lage eingebracht.

Nach dem Imprägnieren, Beschichten oder Besprühen der Lage kann diese zwischen zwei Rollen und/oder Walzen abgequetscht werden. Praktische Versuche haben gezeigt, dass bei einem Abquetschdruck in einem Bereich von 0,5 bis 8 bar, vorzugsweise in einem Bereich von 1 bis 3 bar, die Auftragsmenge optimal eingestellt werden kann und eine homogene Verteilung der aufgetragenen Mischung im Fasergebilde der Lage erfolgt.

Anschließend könnte in einem nächsten Schritt die Polymerisation bzw. Härtung der Monomere bzw. Oligomere stattfinden, wodurch das Absorptionsmaterial gebildet wird. Je nach eingesetztem Initiator und Reaktionsbedingungen kann die Polymerisation autokatalytisch, thermisch durch Einwirken von ionisierender Strahlung oder mittels Plasma eingeleitet werden. Bevorzugt polymerisiert das Monomer bzw. Oligomer in Gegenwart von ultravioletter Strahlung.

Die UV-Härtung könnte unter Verwendung einer UV-Lampe erfolgen. Strahlungsintensität und -zeit richten sich nach der Zusammensetzung der Mischung und der Beschaffenheit der Lage. Besonders gute Ergebnisse werden bei einer Strahlungsintensität im Bereich von 40 bis 400 Watt/cm, vorzugsweise im Bereich von 100 bis 250 Watt/cm bei einer Strahlungszeit im Bereich von 0,1 bis 120 Sekunden erzielt. Zweckmäßigerweise wird die UV-Härtung unter Vakuum oder in Gegenwart eines anorganischen Gases, vorzugsweise Stickstoff, Helium oder Argon oder in Luft, durchgeführt.

Das thermische Härten könnte in einem Ofen, in Luft oder in einer inerten Atmosphäre oder unter Vakuum stattfinden. Denkbar ist auch die aufgetragene Mischung in einem Trockner, wie einem Durchlufttrockner oder einem Infrarottrockner zu polymerisieren bzw. zu härten. Üblicherweise erfolgt die Polymerisation bzw. Härtung in einem Temperaturbereich von 40 bis 100 °C.

Vor diesem Hintergrund ist auch denkbar, zum Härten der Mischung Elektronenstrahlen zu verwenden. Üblicherweise findet die Härtung bei einer Energiedosis im Bereich von 1 bis 16 Megarad, vorzugsweise im Bereich von bis 2 bis 8 Megarad, statt.

Im Anschluss an die Polymerisation kann das behandelte textile Flächengebilde einem oder mehreren Waschschritten unterzogen werden. Hierdurch können Verunreinigungen, beispielsweise nicht umgesetztes Monomer, unvernetztes Polymer, Additive oder Hilfsstoffe, Initiatorreste aus dem textilen Flächengebilde entfernt werden. Das Waschen findet bevorzugt mit Wasser statt und kann kontinuierlich oder diskontinuierlich erfolgen. Praktische Versuche haben ergeben, dass die Abdichtwirkung durch den Waschvorgang erhöht werden kann. Es wird vermutet, dass die beobachtete Erhöhung der Abdichtwirkung auf einer Vergleichmäßigung der Porenstruktur und/oder Reorganisation der Faserstruktur beruht.

Gemäß einer bevorzugten Ausführungsform findet im Anschluss an die Polymerisation ein Neutralisationsschritt statt. Hierzu könnte das textile Flächengebilde durch ein Neutralisationsbad mit einem pH-Wert im Bereich von 9 bis 14, vorzugsweise im Bereich von 10 bis 14, insbesondere im Bereich von 12 bis 14, geführt werden.

Zum Neutralisieren können die bereits zuvor genannten Hydroxide, bevorzugt Alkalimethallhydroxid, insbesondere Natrium-, Kalium- oder Lithiumhydroxid, Carbonat eines Alkalimetalls und/oder Ammoniumhydroxid, verwendet werden.

Nach der Härtung bzw. Polymerisation könnte die restliche Flüssigkeit durch weiteres Trocknen im Umluftofen oder mit Infrarotlampen entfernt werden. Erfindungsgemäß bevorzugt wird die Trocknung durch kontaktlose Energiezufuhr durchgeführt (kontaktlose Trocknung). Unter einer kontaktlosen Trocknung wird dabei verstanden, dass die Energieübertragung nicht über den direkten Kontakt mit einem wärmeübertragenden Material erfolgt (beispielsweise beheizte Walzen), sondern kontaktlos, beispielsweise über Strahlung, vorzugsweise Infrarot- oder Mikrowellenstrahlung und/oder über Heißluft als wärmeübermittelndes Medium, insbesondere Umluft, oder Durchluft. Das kontaktlose Trocknen hat sich als vorteilhaft erwiesen, da eine durch den direkten Kontak mit einem wärmeübertragenden Material verursachte Versiegelung der Oberfläche vermieden werden kann. Üblicherweise haben sich Trocknungstemperaturen im Bereich von 60°C bis 180°C als für die meisten Materialien geeignet erwiesen.

Es ist auch denkbar das textile Flächengebilde einer nachträglichen Behandlung oder Veredelung chemischer Art zu unterziehen, wie beispielsweise einer Anti Pilling-Behandlung, einer Hydrophilierung einer antistatischen Behandlung, einer Behandlung zur Verbesserung der Feuerfestigkeit und/oder zur Veränderung der taktilen Eigenschaften oder des Glanzes, einer Behandlung mechanischer Art wie Aufrauen, Sanforisieren, Schmirgeln oder einer Behandlung im Tumbler und/oder einer Behandlung zur Veränderung des Aussehens wie Färben oder Bedrucken.
Für manche Anwendungszwecke kann es ferner zweckmäßig sein, das textile Flächengebilde nachträglich mit einem oder mehreren Additiven und/oder zu versehen, beispielsweise ausgewählt aus Carbonaten, insbesondere Calciumcarbonat, Rußen, insbesondere Leitruß, Graphiten, Ionenaustauscherharzen, Aktivkohlen, Silicaten, insbesondere Talk, Ton, Glimmer, Kieselerde, Zeolithe, Kreide, Calcium- und Bariumsulfat, Aluminiumhydroxid, Glasfasern und -kugeln sowie Holzmehl, Cellulose-Pulver, pulverförmiger Superabsorber, Perlit, Kork- oder Kunststoffgranulat, gemahlene Thermoplasten, Baumwolle-, Carbonfasern, insbesondere gemahlene Carbonfasern und deren Gemischen. Durch die Zugabe eines Füllstoffs und oder Additivs kann beispielsweise die Durchlässigkeit für Flüssigkeit und/oder Luft verändert sowie die thermische und/oder elektrische Leitfähigkeit des Materials gesteuert werden. Zur Verbesserung der Haftung des Additivs und/oder Füllstoffs kann ein Haftmittel eingesetzt werden, beispielsweise basierend auf Polyvinylalkohol, Polyacrylaten, Polyurethanen, Styrol-Butadien-Kautschuk oder Nitril-Butadien-Kautschuk.

Das mit dem erfindungsgemäßen Verfahren hergestellte textile Flächengebilde eignet sich aufgrund seiner Fähigkeit die Ausbreitung von Wasser entlang der Längsachse des Kabels wirksam zu verhindern, seines geringen Gewichts, seiner hohen Flexibilität hervorragend als Abdichtelement in und/oder um Kabel, beispielsweise (stromführenden Erd- und Seekabel) der verschiedensten Spannungsbereiche.
Gemäß einer besonders bevorzugten Ausführungsform der Erfindung liegt das textile Flächengebilde als Umwicklung oder Bandage im Kabel vor. Gemäß einer besonderen Ausführungsform der Erfindung wird das textile Flächengebilde als Abdichtelement von Hohlräumen im Leiterbereich und/oder Abschirmbereich und/oder im Bereich der Armierung von Kabeln verwendet.

So kann das mit dem erfindungsgemäßen Verfahren hergestellte textile Flächengebilde für Kabel beispielsweise im Abschirmbereich - oberhalb und / oder unterhalb der Schirmelemente (zum Beispiel Metall- (Kupfer-, Aluminium-) Drähte, Folien, Bänder und Metallmäntel) eingesetzt werden. Diese Ausführungsform ist besonders bei Kabeln im Mittelspannungsbereich (1 bis 1150 kV) zweckmäßig.

Gemäß einer weiteren bevorzugten Ausführungsform wird das Flächengebilde im Leiterbereich von Kabeln eingesetzt. So ist beispielsweise die Anordnung des Flächengebildes im segmentierten Leiter, als Ummantelung der Leitersegmente, in den Leitersegmenten, als Ummantelung des gesamten Leiters, geschnitten in Bänder und/oder gedreht zu einem Garn als Abdichtung entlang der offenen Kanäle im Leiterbereich. Diese Ausführungsform ist besonders bei Kabeln im Hoch- und Höchstspannungbereich (60 bis 1150 kV) zweckmäßig. Bei diesen Kabeltypen wird das Flächengebilde vorteilhafterweise zusätzlich im Abschirmbereich, beispielsweise oberhalb und unterhalb der Schirmelemente (Metall- (Kupfer-, Aluminium-) Drähte, Folien, Bänder und Metallmäntel) eingebracht.

Gemäß einer weiteren bevorzugten Ausführungsform der Erfindung wird das Flächengebilde als Ummantelung von Einzelkabeln, Kabelbündeln und des Leiterkerns bzw. geschnitten in Bänder und/oder gedreht zu einem Garn als Abdichtung entlang der offenen Kanäle in Kabelbündeln als Kabelfüllung eingesetzt. Diese Ausführungsform ist besonders bevorzugt bei Daten-, Signal-, Glasfaser- und Telekommunikationskabeln.

Bei Seekabeln bietet sich als weiterer Einsatzbereich alternativ oder bevorzugt zusätzlich zu den oben genannten Einsatzbereichen die Anordnung innerhalb der Armierung an.

In einer bevorzugten Ausführungsform der Erfindung wird das mit dem erfindungsgemäßen Verfahren hergestellte textile Flächengebilde als Abdichtelement von Hohlräumen in Daten-, Signal-, Glasfaser- und Telekommunikationskabeln und Kabeln zur Energieübertragung verwendet. Besonders bevorzugt ist der Einsatz in Kabeln zur Energieübertragung.

In einer weiteren bevorzugten Ausführungsform der Erfindung wird das mit dem erfindungsgemäßen Verfahren hergestellte textile Flächengebilde in Bandform und/oder gedreht zu einem Garn als Abdichtung entlang der offenen Kanäle in Einzelkabeln, Kabelbündeln und/oder zwischen Kabellagen und/oder als Ummantelung einzelner Kabellagen eingesetzt.

In einer weiteren bevorzugten Ausführungsform der Erfindung wird das mit dem erfindungsgemäßen Verfahren hergestellte textile Flächengebilde als Abdichtelement von Hohlräumen im und/oder über dem Leiter, über und/oder unter der Abschirmung, in und/oder über und/oder unter der Armierung von Kabeln zur Energieübertragung verwendet.

In einer weiteren bevorzugten Ausführungsform der Erfindung wird das mit dem erfindungsgemäßen Verfahren hergestellte textile Flächengebilde oberhalb und / oder unterhalb der Schirmelemente von Kabeln und/oder im Leiterbereich als Ummantellung des Leiterkerns und/oder einem oder mehreren der Leitersegmente eines segmentierten Leiters und/ oder innerhalb des Leiterkerns oder der Leitersegmente, geschnitten in Bänder und/ oder gedreht zu einem Garn als Abdichtung entlang der offenen Kanäle im Leiterbereich verwendet.

### Kurzbeschreibung der Zeichnung

In der Zeichnung zeigen
- Fig. 1: eine schematische Ansicht eines textilen Flächengebildes mit vollständiger Bedeckung,
- Fig. 2: eine Detailansicht des in Figur 1 dargestellten textilen Flächengebildes in trockenem Zustand,
- Fig. 3: eine Detailansicht des in Figur 1 dargestellten textilen Flächengebildes unter Einwirkung von Flüssigkeit,
- Fig. 4: eine schematische Ansicht eines textilen Flächengebildes mit teilweiser Bedeckung,
- Fig. 5: eine Detailansicht des in Figur 4 dargestellten textilen Flächengebildes in trockenem Zustand,
- Fig. 6: eine Detailansicht des in Figur 4 dargestellten textilen Flächengebildes unter Einwirkung von Wasser
- Fig. 7: eine schematische Darstellung des lagenweisen Aufbaus eines Kabels zur Energieübertragung.

### Ausführung der Erfindung

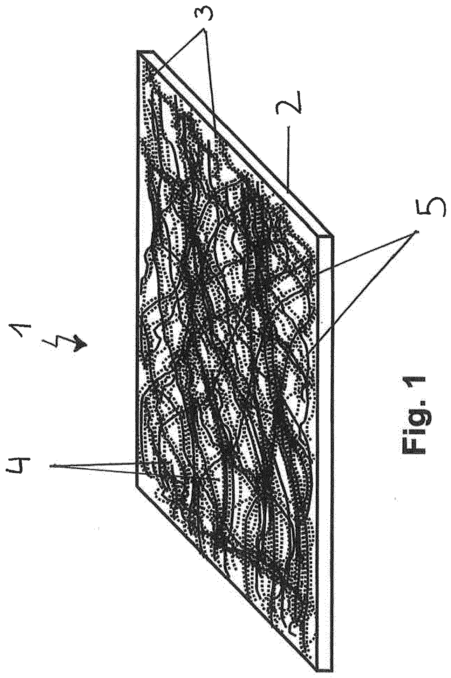

Figur 1 zeigt ein textiles Flächengebilde 1, umfassend mindestens eine Lage 2, die mindestens teilweise von einem Absorptionsmaterial 3 bedeckt ist und Poren 4 aufweist, wobei die Poren 4 unter Einwirkung von Flüssigkeit aufgrund einer Quellung des Absorptionsmaterials 3 zumindest teilweise verschlossen werden können.

Das Absorptionsmaterial 3 ist zumindest bereichsweise stoffschlüssig an die textile Lage 2 angebunden.

Die Poren 4 und die Größe der Poren 4 sind statistisch zufällig verteilt. Der geometrische Aufbau der Poren 4 ist regellos. Bei den Poren 4 handelt es sich nicht um regelmäßig aufgebaute geometrische Körper wie Quader oder Oktaeder, sondern um offenzellige oder geschlossene Zwischenräume die durch Fasern 5 bzw. das Absorptionsmaterial 3 voneinander getrennt werden.

Die textile Lage 2 besteht aus einem chemisch verfestigten Vliesstoff.

Die textile Lage 2 in Figur 1 enthält Polyesterfasern 5.

Das Absorptionsmaterial 3 in Figur 1 bedeckt die Fasern 5 im Wesentlichen vollständig.

Das textile Flächengebilde 1 in Figur 1 weist eine Dicke von 0,5 mm auf.

Das textile Flächengebilde 1 in Figur 1 weist ein Flächengewicht von 100 g/m².

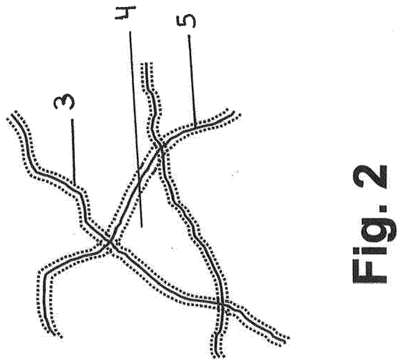

Fig. 2 zeigt eine Detailansicht des in Figur 1 dargestellten textilen Flächengebildes 1 in trockenem Zustand. Dieses textile Flächengebilde 1 umfasst mindestens eine Lage 2, die mindestens teilweise von einem Absorptionsmaterial 3 bedeckt ist und Poren 4 aufweist, wobei die Poren 4 unter Einwirkung von Flüssigkeit aufgrund einer Quellung des Absorptionsmaterials 3 zumindest teilweise verschlossen werden können. Das Absorptionsmaterial 3 ist bereichsweise stoffschlüssig an die textile Lage 2 angebunden.

Die Fasern 5 der Lage 2 sind vollständig mit dem Absorptionsmaterial 3 bedeckt bzw. beschichtet.

Die in Figur 2 gezeigte Lüftungsöffnung 4 ist geöffnet.

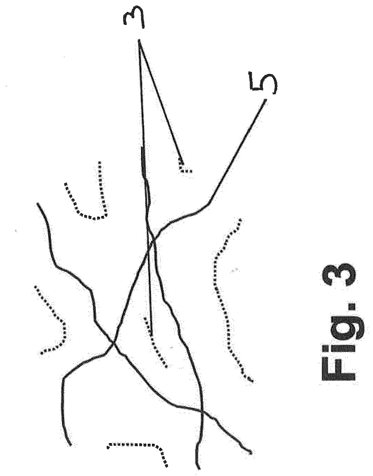

Fig. 3 zeigt eine Detailansicht des in Figur 1 dargestellten textilen Flächengebildes 1 unter Einwirkung von Flüssigkeit. Die eindringende Flüssigkeit wird vom Absorptionsmaterial 3 aufgenommen. Das aufgequollene Absorptionsmaterial 3 füllt die Lüftungsöffnung 4, dargestellt in Figur 2, vollständig aus und verschließt diese gegen den Durchtritt von Flüssigkeit oder eines Gases.

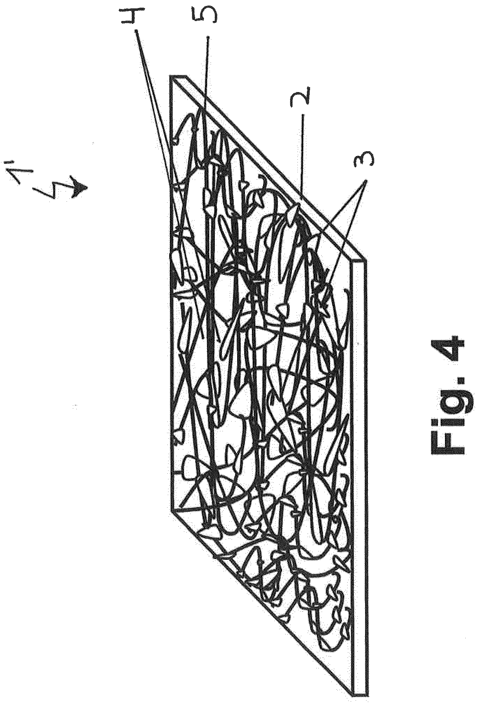

Fig. 4 zeigt ein textiles Flächengebilde 1', umfassend mindestens eine Lage 2, die mindestens teilweise von einem Absorptionsmaterial 3 bedeckt ist und Poren 4 aufweist, wobei die Poren 4 unter Einwirkung von Flüssigkeit aufgrund einer Quellung des Absorptionsmaterials 3 zumindest teilweise verschlossen werden können.

Das Absorptionsmaterial 3 ist zumindest bereichsweise stoffschlüssig an die textile Lage 2 angebunden.

Das Absorptionsmaterial 3 bedeckt die Fasern 5 teilweise.

Die Poren 4 sind gleichmäßig in der Lage 2 verteilt.

Das textile Flächengebilde 1', dargestellt in Figur 4, weist ein Flächengewicht von 100 g/m² auf.

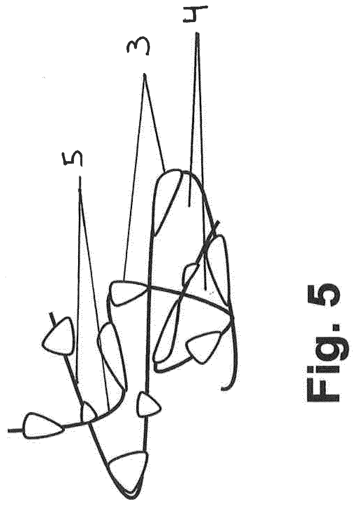

Fig. 5 zeigt eine Detailansicht des in Figur 4 dargestellten textilen Flächengebildes 1' in trockenem Zustand. Das Absorptionsmaterial 3 ist bereichsweise stoffschlüssig mit den Fasern 5 der Lage 2 verbunden.

Die Poren 4 sind geöffnet.

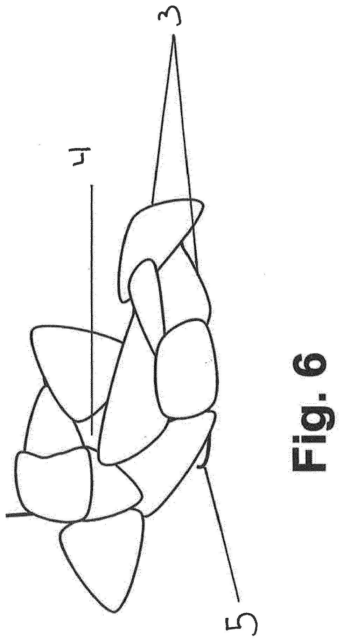

Fig. 6 zeigt eine Detailansicht des in Figur 4 dargestellten textilen Flächengebildes 1' unter Einwirkung von Wasser.

Das eindringende Wasser wird vom Absorptionsmaterial 3 unter einer Volumenzunahme aufgenommen. Durch ein Aufquellen des Absorptionsmaterials 3 wird die Lüftungsöffnung 4 teilweise verschlossen.

Die Dicke des in Figur 4 dargestellten textilen Flächengebildes 1' hat sich unter Einwirkung von Wasser um das 3-fache erhöht.

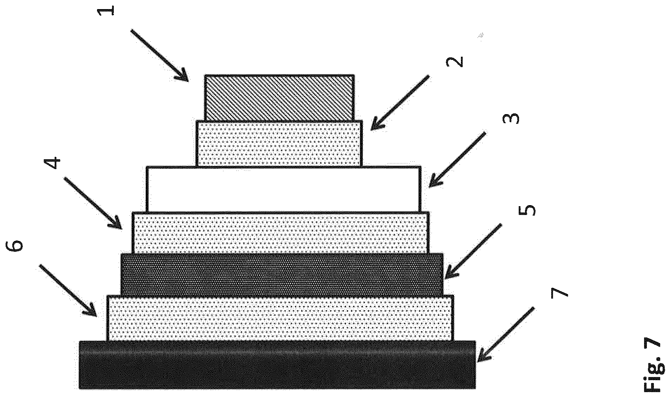

Figur 7 zeigt eine schematische Darstellung eines beispielhaften lagenweisen Aufbaus eines Kabels zur Energieübertragung. Kabellage 1 stellt den Leiter dar, der aus einzelnen Drähten oder Leitersegmenten aufgebaut sein kann. Als Kabellage 2 wird in Figur 7 eine erfindungsgemäßes textiles Flächengebilde als Abdichtlage eingesetzt. Kabellage 3 stellt eine Isolationslage aus Polyethylen dar, die im vorliegenden Fall mehrlagig ausgebildet ist. Als Kabellage 4 wird in Figur 7 eine erfindungsgemäßes textiles Flächengebilde als Abdichtlage eingesetzt. Kabellage 5 ist die Abschirmung. Als Kabellage 6 wird in Figur 7 eine erfindungsgemäßes textiles Flächengebilde als Abdichtlage eingesetzt. Kabellage 7 ist der Kabelmantel. In der Abbildung nicht dargestellt ist die Armierung. Diese könnte unterhalb des Kabelmantels angeordnet sein.

Das soeben beschriebene textile Flächengebilde kann gemäß den folgenden Ausführungsbeispielen hergestellt werden:

### Ausführungsbeispiel 1:

Zur Herstellung einer teilneutralisierten Acrylsäurelösung werden 8,00 g Natriumhydroxid in 21,00 g Wasser gelöst und mit 21,00 g Acrylsäure versetzt. Anschließend werden 25,00 g der teilneutralisierten Acrylsäurelösung mit 0,50 g 1-[4-(2-Hydroxyethoxy)-phenyl]-2-hydroxy-2-methyl-1-propan-1-on, 1,00 g Heptylpolyethylenglykolether (C₇H₁₅O(CH₂CH₂O)_{6,5}H) und 47,00 g Wasser homogen vermischt. Der pH-Wert der Lösung beträgt ca. 4.

Der Lösung werden 0,25 g N,N'-Methylendiacrylamid hinzugegeben und diese wird 15 Minuten bei einer Temperatur von ca. 22 °C gerührt. Die erhaltene Lösung wird bei 20 °C im Foulard vorgelegt. Anschließend wird als Basismaterial ein 10 x 10 cm Polyethylenterephthalatvlies mit einem Flächengewicht von 40 g/m² (längs gelegt, chemisch verfestigt, Luftdurchlässigkeit größer 1500 dm³/(m²s) bei 100 Pa Luftdruckdifferenz, Dicke 0,2 mm) eingeführt und durch den Foulard (Sawafill 1122, Firma Sandler) gezogen. Es werden 180 g/m² in das Fasergebilde der Lage eingebracht.

Das imprägnierte Vlies wird zwischen zwei Rollen abgequetscht und durch UV-Behandlung wird die Polymerisation einer Mischung, enthaltend Acrylsäure, einen Vernetzer, ein Benetzungsmittel und einen Initiator, gestartet. Die UV-Behandlung erfolgt durch Zuschalten von UV-Strahlern (Firma Dr. Hönle, Typ Uvahand 250, 250 Watt pro Strahler). Die Bestrahlungszeit beträgt 10 Sekunden. Der Vernetzungsgrad des Absorptionsmaterials liegt bei 0,011. Das bestrahlte Vlies wird mit Wasser gewaschen und vier Stunden bei 70 °C getrocknet.

Das Flächengewicht des im Ausführungsbeispiel 1 hergestellten textilen Flächengebildes beträgt 65 g/m².

Die Quellrate definiert die Menge an Wasser, die vom textilen Flächengebilde innerhalb einer festgelegten Zeitspanne absorbiert wird, wobei sich dieser Wert auf das Trockengewicht des textilen Flächengebildes bezieht.

Die Quellrate wird durch Messen der Gewichtszunahme in Zeitspannen von 0 bis 20 Minuten bestimmt. Das Flächengewicht nach der Quellung liegt bei 1800 g/m².

Die Dicke des in Ausführungsbeispiel 1 hergestellten textilen Flächengebildes beträgt 0,3 mm. Seine Zugfestigkeit beträgt 150 N/5cm, seine Luftdurchlässigkeit beträgt 1800 dm³/(m²s) bei 100 Pa Luftdruckdifferenz.

### Referenzbeispiel 1:

Es wurde ein weiteres textiles Flächengebilde entsprechend der Vorgehensweise aus Beispiel 1 hergestellt. Im Unterschied hierzu wurde jedoch ein thermisch verfestigter Polyethlyenterephthalatvliesstoff mit einer Luftdurchlässigkeit von unter 500 dm³/(m²s) verwendet.
Hierdurch wird ein erfindungsgemäßes Flächengebilde mit einer Luftdurchlässigkeit von erzielt 120 dm³/(m²s).

### Ausführungsbeispiel 2:

Um das Blockieren des Wassertransportes entlang von Hohlräumen im Kabel zu simulieren, wurde die durch ein textiles Flächengebilde bewirkte Längsdichtigkeit unter konstanter Spalthöhe untersucht. Der Versuch findet in Anlenung an Testmethoden statt, die an fertigen Erd- oder Seekabeln durchgeführt werden. Bei diesen Versuchen werden Kabel seitlich mit einer Bohrung versehen und ein Wasserdruck von 1m Wassersäule appliziert. Nach definierter Zeit wird das Kabel geöffnet und die Laufweite des Wassers analysiert.

Der hier verwendete Versuchsaufbau ist wie folgt beschrieben: Als Bodenplatte dient eine rechteckige Platte aus Plexiglas mit zwei langen Seiten A (je 350 mm Länge) und zwei kurzen Seiten B und C (je 310 mm Länge). Auf der Bodenplatte ist eine rechteckige Probenablagefläche markiert mit zwei langen Seiten A' (je 297 mm Länge) und zwei kurzen Seiten B' und C' (je 210 mm Länge). Dabei schließt die Probenablagefläche mit ihrer kurzen Seite B' bündig mit der Seite B der Bodenplatte ab und die Seiten A' sind äquidistant zu den Seiten A der Bodenplatte positioniert und verlaufen parallel zu diesen. Auf die Probenablagefläche wird ein DIN-A4 Muster des textilen Flächengebildes aufgelegt. Die Probenablagefläche ist mit einer gefrästen Rille von 1 mm Tiefe umgeben, die entlang der Seiten A' und C' verläuft. In die Rille wird ein flexibler Silikonschlauch von 3 mm Durchmesser eingelegt. Der Schlauch dient später zur Abdichtung gegenüber einer aufgebrachten Deckplatte. Neben den Silikonschlauch wird auf den Außenseiten A der Bodenplatte jeweilse ein Stab aus Edelstahl mit 350 mm Länge und 2 mm Durchmesser (bei runden Querschnitt) aufgelegt. Anschließend wird eine Deckplatte aus Plexiglas, die in ihren Abmessungen (350 mm x 310 mm) der Bodenplatte entspricht, aufgelegt. Deck- und Bodenplatte werden im Außenbereich (außerhalb der Probenablagefläche) mit Hilfe von jeweils 3 Schrauben/Muttern pro Seite A und einem weiteren Schrauben/Mutter Paar auf der Seite B fest miteinander verschraubt. Dabei wird der Abstand zwischen Deckplatte und Bodenplatte, die sogenannte Spalthöhe, durch die zuvor eingelegten Metallstäbe definiert. Die Spalthöhe beträgt ca. 2 mm. Beim Anziehen der Schrauben wird außerdem der elastische Silikonschlauch komprimiert, sodass eine Abdichtung im Bereich der Probenauflagefläche entlang der Seiten A' und C' erreicht wird. Auf der Seite B' ist Probenauflagefläche geöffnet, was die spätere Laufrichtung von zugeführtem Wasser von Seite C' in Richtung B' definiert. Die Deckplatte weist oberhalb der Probenauflagefläche eine rechteckige Öffnung in der Abmessung von 210 mm x 50 mm auf, die mit ihrer langen Seite mit der Seite C' der Probenauflagefläche abschließt. Auf die Öffnung ist ein quaderförmiges Wasserreservoir aus Plexiglas angebracht, dass mit 500 ml Wasser befüllt werden kann.
Die Durchführung eines Abdichtversuches wird in zwei Stufen durchgeführt. In der ersten Stufe wird das Wasserreservoir aus einem geöffnetem Scheidetrichter mit 500 ml deionisiertem Wasser gefüllt. Das Wasser fließt in den definierten Spalt im Bereich der Probeauflagefläche. Das Voranfließen der Wasserfront kann durch die transparente Deckplatte aus Plexiglas sehr gut verfolgt werden. Wurde ein textiles Flächengebilde eingelegt, das mit einem Absorptionsmittel ausgerüstet ist, so quillt dieses auf, der Spalt wird blockiert und die Lauffront des Wasser kommt zum Stillstand. Es wird die Zeit bis zum Stillstand der Lauffront gemessen und als Abdichtzeit bezeichnet. Der zugehörige Abdichtweg wird als mittlere Distanz der Wasserfront zur Seite C' definiert und graphisch ausgemessen.
In der zweiten Stufe des Versuchs wird dem Wasserreservoir über einen angebrachten Stutzen eine 1 m hohe Wassersäule aufgesetzt. Dazu wird ein Scheidetrichter als Wasserreservoir mit Hilfe eines Schlauches mit dem Stutzen verbunden und so angebracht, dass der Wasserstand im Trichter sich 100 cm oberhalb der Probeauflagefläche befindet. Es wird dann das Voranschreiten der Lauffront in Abhängigkeit der Messdauer unter konstanten Wasserdruck notiert. Mit Hilfe des beschriebenen Versuchsaufbaus wird das erfindungsgemäße textile Flächengebilde aus dem Ausführungsbeispiel 1 untersucht. Als Vergleich dient Referenzbeispiel 1 sowie ein Material, bei dem ein pulverförmiger Superabsorber (Masse Absorptionsmittel: 30 g/m²) mit Hilfe eines Haftmittels als Beschichtung auf einen Vliesstoff aufgebracht ist (Referenzbeispiel 2).

Blockierzeit und Blockierweg der Materialien ist in Tabelle 1 dargestellt. Das aus dem Stand der Technik bekannte Material führt nach einer Abdichtzeit von 14 s und einem zugehörigen Abdichtweg von 7 cm zu einem Blockieren der Lauffront. Es zeigt sich, dass das mit dem erfindungsgemäßen Verfahren hergestellte textile Flächengebilde aus Ausführungsbeispiel 1, gekennzeichnet durch eine Luftdurchlässigkeit von 1800 dm³/(m²s), in deutlich kürzerer Abdichtzeit von 9 s und vor allem mit einem sehr viel geringerem Abdichtweg von 2 cm zu einem Abdichten des Hohlraums führt.
Im Gegensatz dazu zeigt das textile Flächengebilde aus Referenzbeispiel 1 mit einer Luftdurchlässigkeit von 120 dm³/(m²s) kein Abdichten gegenüber dem Wassereintritt. Das zugeführte Wasser durchläuft die Appartur vollständig. Eine Erklärung ist daran zu finden, dass die hohe Luftdurchlässigkeit bzw. Offenporigkeit des textilen Flächengebildes aus Ausführungsbeispiel 1 eine sehr schnelle Aufnahme des Wassers ermöglicht. Damit einher gehen eine hohe Quellgeschwindigkeit bzw. eine geringe Abdichtzeit.

| **Beispiel** | **Masse Absorptionsmittel** [g/m²] | **Abdichtzeit** [s] | **Abdichtweg** [cm] |
|---|---|---|---|
| Ausführungsbeispiel 1 | 30 | 9±2 | 7±1 |
| Referenzbeispiel 1 | 30 | Kein Abdichten | Kein Abdichten |
| Referenzbeispiel 2 | 30 | 14±2 | 12±1 |

Die Analyse des Abdichtverhaltens unter konstantem Druck einer Wassersäule der Höhe von 1m ist in Tabelle 2 gezeigt.

| **Beispiel** | **Masse Absorptionsmittel** [g/m²] | **Wanderung Lauffront; Druck: 1 m Wassersäule** [cm / Tag] |
|---|---|---|
| Ausführungsbeispiel 1 | 30 | 0,5 |
| Referenzbeispiel 1 | 30 | Kein Abdichten |
| Referenzbeispiel 2 | 30 | 4,5 |

Bei Referenzbeispiel 2 wandert die Lauffront unter konstantem Wasserdruck einer 1m Wassersäule mit 4,5 cm pro Tag (24h). Bei Wasserkontakt löst sich das wasserlösliche Haftmittel auf und der pulverförmige Superabsorber quillt an. Da das Haftmittel seine Funktion verloren hat, hat auch der gequollene Superabsorber seine Verankerung auf dem Vliesstoffsubstrat verloren. Unter konstanten Wasserdruck ist der gequollene Superabsorber mobil und migriert physikalisch entlang des Hohlraums. Im Gegensatz dazu zeigt das mit dem erfindungsgemäßen Verfahren hergestellte textile Flächengebilde (Ausführungsbeispiel 1) eine deutlich verbesserte Langzeitabdichtung unter konstantem Wasserdruck. Die Lauffront wandert nur 0,5 cm pro Tag (24h). Ursache dafür ist die sehr viel bessere Verankerung des Absorptionsmittels im Basismaterial. Auf Grund der hohen Luftdurchlässigkeit von 1800 dm³/(m²s) liegt für das mit dem erfindungsgemäßen Verfahren hergestellte textile Flächengebilde eine sehr große Kontaktfläche zwischen Absorptionsmittel und Vliesstoffsubstrat vor. Das Absorptionsmittel umschließt dabei die Fasern der textilen Lage teilweise stoffschlüssig, was zu einer exzellenten Verankerung und sehr guten Abdichtleistung führt.

### Ausführungsbeispiel 3:

Um die Auswirkung verschiedener Trockungsarten, d.h. Kontakttrocknung und kontaktloses Trocken zu untersuchen, wurde das im Ausführungsbeispiel 1 hergestellte Flächegebilde einmal mittels Heißluft getrocknet und einmal mit einem beheizten Zylindertrockner. Es zeigte sich, dass bei der Verwendung des Zylindertrockners eine deutliche Versiegelung der Oberfläche des Flächengebildes auftrat, welche sich in einer signifikanten Verringerung der Luftdurchlässigkeit widerspiegelte. Die Ergebnisse sind in der nachfolgenden Tabelle dargestellt.

| **Beispiel** | **Luftdurchlässigkeit** [dm³/(m²s)] |
|---|---|
| Ausführungsbeispiel 1, Kontakttrocknung | 260 |
| Ausführungsbeispiel 1, kontaktloses Trocknen | 1800 |

## Patentansprüche

1. Verfahren zur Herstellung eines textilen Flächengebildes (1,1') zur Verhinderung des Eindringens und der Ausbreitung von Wasser in Kabeln, umfassend mindestens eine Lage (2), die mindestens teilweise von einem Absorptionsmaterial (3) bedeckt ist und Poren (4) aufweist, wobei die Poren (4) unter Einwirkung von Flüssigkeit aufgrund einer Quellung des Absorptionsmaterials (3) zumindest teilweise verschlossen werden können, und wobei das Absorptionsmaterial (3) zumindest bereichsweise stoffschlüssig an die textile Lage (2) angebunden ist, eine Zugfestigkeit in Maschinenrichtung (MD) von mehr als 50 N/5cm, gemessen nach DIN ISO 9073-3, aufweist umfassend die folgenden Verfahrensschritte:
a) Behandeln einer Poren (4) aufweisenden Lage (2) mit einer Mischung, enthaltend ein polymerisierbares Monomer oder Oligomer und einen Vernetzer, als Vorstufe für das Absorptionsmaterial (3), ein Benetzungsmittel und einen Initiator und
b) Polymerisation des Monomers oder Oligomers zu dem Absorptionsmaterial (3) unter Ausbildung einer stoffschlüssigen Verbindung zwischen dem Absorptionsmaterial (3) und der Lage,
**dadurch gekennzeichnet, dass** das textile Flächengebilde eine Luftdurchlässigkeit gemäß DIN EN ISO 9237 im trockenen Zustand von 500 bis 3000 dm³/(m²s) aufweist.

2. Verfahren nach Anspruch 1, **dadurch gekennzeichnet, dass** die textile Lage (2) Fasern (5) enthält, ausgewählt aus der Gruppe bestehend aus:
Polyolefinen-, insbesondere Polyphenylensulfid-, Polyester-, insbesondere Polyethylenterephthalat-, Polybutylenterephthalat-; Polyamid-, insbesondere Polyamid 6.6 (Nylon®), Polyamid 6.0 (Perlon®)-; Polyvinylchlorid-, Polyacrylnitril-, Polyimid-, Polytetrafluorethylen (Teflon®)-, Aramid-, Woll-, Baumwoll-, Seide-, Hanf-, Bambus-, Kenaf-, Sisal-, Cellulose-, Soja-, Flacks-, Glas-, Basalt-, Carbon-, Viskosefasern und deren Gemischen.

3. Verfahren nach Anspruch 1 oder 2, **dadurch gekennzeichnet, dass** textile Flächengebilde eine Dicke gemäß DIN EN 9073-2 von 0,1 bis 3 mm aufweist.

4. Verfahren nach einem oder mehreren der vorangehenden Ansprüche, **dadurch gekennzeichnet, dass** als Benetzungsmittel eine Verbindung der folgenden Formel
RO(CH₂CH₂O)ₓH,
verwendet wird, wobei R ein linearer oder verzweigter Alkylrest ist und wobei x= 4; 5; 6,3; 6,5; 7; 8; 9; 10 oder 11 ist, vorzugsweise 6.5; 7; 8; 9; 10, insbesondere 6.5; 7; 8; 9.

5. Verfahren nach einem oder mehreren der vorangehenden Ansprüche, **dadurch gekennzeichnet, dass** der Anteil des Benetzungsmittels bezogen auf die Gesamtmenge der Mischung im Bereich von 0,1 bis 5 Gew.-% liegt, vorzugsweise von 1 bis 4 Gew.-%, insbesondere von 1,5 bis 3,5 Gew.-%.

6. Verfahren nach einem oder mehreren der vorangehenden Ansprüche, **dadurch gekennzeichnet, dass** durch die Zugabe eines Benetzungsmittels eine Oberflächenspannung gemäß DIN 55660 der Mischung im Bereich von 10 bis 72 dyn eingestellt wird, vorzugsweise im Bereich von 15 bis 60 dyn und/oder im Bereich von 20 bis 68 dyn.

7. Verfahren nach einem oder mehreren der vorangehenden Ansprüche, **dadurch gekennzeichnet, dass** ein Vernetzungsgrad im Bereich von 4,7^{∗}10⁻⁵ bis 1,9^{∗}10⁻¹, vorzugsweise von 2,3^{∗}10⁻⁴ bis 1,3^{∗}10⁻¹, insbesondere von 4,7^{∗}10⁻⁴ bis 4,9^{∗}10⁻², eingestellt wird.

8. Verfahren nach einem oder mehreren der vorangehenden Ansprüche, **dadurch gekennzeichnet, dass** das polymerisierbare Monomer oder Oligomer ausgewählt ist aus der Gruppe bestehend aus Acrylsäure, Methacrylsäure, Amide, Vinylsufonsäuren und deren Gemische.

9. Verfahren nach einem oder mehreren der vorangehenden Ansprüche, **dadurch gekennzeichnet, dass** durch die Polymerisation in Verfahrensschritt b) ein Superabsorber gebildet wird.

10. Verfahren nach einem oder mehreren der vorangehenden Ansprüche umfassend die Verwendung des mit dem Verfahren hergestellten textilen Flächengebildes zur Verhinderung des Eindringens und der Ausbreitung von Wasser in Kabeln.

11. Verfahren nach einem oder mehreren der vorangehenden Ansprüche umfassend die Verwendung des mit dem Verfahren hergestellten textilen Flächengebildes als Abdichtelement von Hohlräumen in Daten-, Signal-, Glasfaser- und Telekommunikationskabeln und Kabeln zur Energieübertragung.

12. Verfahren nach einem oder mehreren der vorangehenden Ansprüche umfassend das Einsetzen des mit dem Verfahren hergestellten textilen Flächengebildes in Bandform und/oder gedreht zu einem Garn als Abdichtung entlang der offenen Kanäle in Einzelkabeln, Kabelbündeln und/oder zwischen Kabellagen und/oder als Ummantelung einzelner Kabellagen.

13. Verfahren nach einem oder mehreren der vorangehenden Ansprüche umfassend die Verwendung des mit dem Verfahren hergestellten textilen Flächengebildes als Abdichtelement von Hohlräumen im und/oder über dem Leiter, über und/oder unter der Abschirmung, in und/oder über und/oder unter der Armierung von Kabeln zur Energieübertragung.

14. Verfahren nach einem oder mehreren der vorangehenden Ansprüche umfassend die Verwendung des mit dem Verfahren hergestellten textilen Flächengebildes oberhalb und / oder unterhalb der Schirmelemente von Kabeln und/oder im Leiterbereich als Ummantellung des Leiterkerns und/oder einem oder mehreren der Leitersegmente eines segmentierten Leiters und/ oder innerhalb des Leiterkerns oder der Leitersegmente, geschnitten in Bänder und/ oder gedreht zu einem Garn als Abdichtung entlang der offenen Kanäle im Leiterbereich.

## Claims

1. Method for producing a textile fabric (1, 1') for preventing the intrusion and the spread of water in cables, comprising at least one ply (2) which is at least partly covered by an absorption material (3) and has pores (4), it being possible for the pores (4) to be at least partly closed due to swelling of the absorption material (3) under the action of liquid, and the absorption material (3) having at least regionally substance-to-substance attachment to the textile ply (2) and having a tensile strength in machine direction (MD) of more than 50 N/5 cm, measured according to DIN ISO 9073-3, comprising the following method steps:
a) treating a ply (2) having pores (4) with a mixture comprising a polymerizable monomer or oligomer and a crosslinker, as precursor to the absorption material (3), a wetting agent and an initiator, and
b) polymerizing the monomer or oligomer to give the absorption material (3) while forming a substance-to-substance bond between the absorption material (3) and the ply,
**characterized in that** the textile fabric has a DIN EN ISO 9237 air permeability in the dry state of 500 to 3000 dm³/ (m²s).

2. Method according to Claim 1, **characterized in that** the textile ply (2) comprises fibres (5) selected from the group consisting of: fibres of polyolefins, especially polyphenylene sulfide, polyester, especially polyethylene terephthalate, polybutylene terephthalate; polyamide, especially polyamide 6.6 (Nylon®), polyamide 6.0 (Perlon®) ; polyvinyl chloride, polyacrylonitrile, polyimide, polytetrafluoroethylene (Teflon®), aramid, wool, cotton, silk, hemp, bamboo, kenaf, sisal, cellulose, soya, flax, glass, basalt, carbon and viscose and mixtures thereof.

3. Method according to Claim 1 or 2, **characterized in that** textile fabric has a DIN EN 9073-2 of 0.1 to 3 mm.

4. Method according to one or more of the preceding claims, **characterized in that** a compound of the following formula
RO(CH₂CH₂O)ₓH,
is used as wetting agent, where R is a linear or branched alkyl radical and where x is 4; 5; 6.3; 6.5; 7; 8; 9; 10 or 11, preferably 6.5; 7; 8; 9; 10, more particularly 6.5; 7; 8; 9.

5. Method according to one or more of the preceding claims, **characterized in that** the fraction of the wetting agent, based on the total amount of the mixture, is in the range from 0.1 to 5 wt%, preferably from 1 to 4 wt%, more particularly from 1.5 to 3.5 wt%.

6. Method according to one or more of the preceding claims, **characterized in that** the addition of a wetting agent establishes a DIN 55660 surface tension of the mixture in the range from 10 to 72 dyn, preferably in the range from 15 to 60 dyn and/or in the range from 20 to 68 dyn.

7. Method according to one or more of the preceding claims, **characterized in that** a degree of crosslinking is established in the range from 4.7^{∗}10⁻⁵ to 1.9^{∗}10⁻¹, preferably from 2.3^{∗}10⁻⁴ to 1.3^{∗}10⁻¹, more particularly from 4.7^{∗}10⁻⁴ to 4.9^{∗}10⁻².

8. Method according to one or more of the preceding claims, **characterized in that** the polymerizable monomer or oligomer is selected from the group consisting of acrylic acid, methacrylic acid, amides, vinylsulfonic acids and mixtures thereof.

9. Method according to one or more of the preceding claims, **characterized in that** a superabsorbent is formed by the polymerization in method step b).

10. Method according to one or more of the preceding claims, comprising the use of the textile fabric produced by the method for preventing the intrusion and the spread of water in cables.

11. Method according to one or more of the preceding claims, comprising the use of the textile fabric produced by the method as a sealing element for voids in data cables, signal cables, glass fibre cables, telecommunication cables and cables for energy transmission.

12. Method according to one or more of the preceding claims, comprising the employment of the textile fabric produced by the method, in tape form and/or twisted to a yarn, as sealing along the open channels in individual cables, cable bundles and/or between cable plies and/or as sheathing of individual cable plies.

13. Method according to one or more of the preceding claims, comprising the use of the textile fabric produced by the method as a sealing element for voids in and/or over the conductor, over and/or under the shielding, in and/or over and/or under the armouring of cables for energy transmission.

14. Method according to one or more of the preceding claims, comprising the use of the textile fabric produced by the method above and/or below the screening elements of cables and/or in the conductor region as sheathing of the conductor core and/or one or more of the conductor segments of a segmented conductor and/or within the conductor core or the conductor segments, slit into tapes and/or twisted to a yarn, as sealing along the open channels in the conductor region.

## Revendications

1. Procédé pour la fabrication d'une structure plane textile (1,1') pour empêcher la pénétration et la propagation d'eau dans des câbles, comprenant au moins une couche (2), qui est recouverte au moins partiellement par un matériau d'absorption (3) et qui présente des pores (4), les pores (4) pouvant être fermés au moins partiellement sous l'effet d'un liquide sur la base d'un gonflement du matériau d'absorption (3) et le matériau d'absorption (3) étant lié au moins par zones, par liaison de matière, à la couche textile (2), présentant une résistance à la traction dans la direction de la machine (MD) supérieure à 50 N/5 cm, mesurée selon la norme DIN ISO 9073-3, comprenant les étapes de procédé suivantes :
a) traitement d'une couche (2) présentant des pores (4) par un mélange contenant un monomère ou un oligomère polymérisable et un réticulant, comme précurseur pour le matériau d'absorption (3), un agent mouillant et un initiateur et
b) polymérisation du monomère ou de l'oligomère en matériau d'absorption (3) avec formation d'un assemblage par liaison de matière entre le matériau d'absorption (3) et la couche,
**caractérisé en ce que** la structure plane textile présente une perméabilité à l'air selon la norme DIN EN ISO 9237 à l'état sec de 500 à 3000 dm³/(m²s).

2. Procédé selon la revendication 1, **caractérisé en ce que** la couche textile (2) contient des fibres (5) choisies dans le groupe constitué par : les fibres de polyoléfine, en particulier de poly(sulfure de phénylène), de polyester, en particulier de poly(téréphtalate d'éthylène), de poly(téréphtalate de butylène) ; de polyamide, en particulier de polyamide 6, 6 (Nylon®), de polyamide 6,0 (Perlon®) ; de poly(chlorure de vinyle), de polyacrylonitrile, de polyimide, de polytétrafluoroéthylène (Teflon®), d'aramide, de laine, de coton, de soie, de chanvre, de bambou, de kénaf, de sisal, de cellulose, de soja, de lin, de verre, de basalte, de carbone, de viscose et leurs mélanges.

3. Procédé selon la revendication 1 ou 2, **caractérisé en ce que** la structure plane textile présente une épaisseur selon la norme DIN EN 9073-2 de 0,1 à 3 mm.

4. Procédé selon l'une ou plusieurs des revendications précédentes, **caractérisé en ce qu'**on utilise, comme agent mouillant, un composé de la formule suivante
RO(CH₂CH₂O)ₓH,
R représentant un radical alkyle linéaire ou ramifié et x = 4 ; 5 ; 6, 3 ; 6, 5 ; 7 ; 8 ; 9 ; 10 ou 11, de préférence 6,5 ; 7 ; 8 ; 9 ; 10, en particulier 6,5 ; 7 ; 8 ; 9.

5. Procédé selon l'une ou plusieurs des revendications précédentes, **caractérisé en ce que** la proportion d'agent mouillant par rapport à la quantité totale du mélange se situe dans la plage de 0,1 à 5% en poids, de préférence de 1 à 4% en poids, en particulier de 1,5 à 3,5% en poids.

6. Procédé selon l'une ou plusieurs des revendications précédentes, **caractérisé en ce que** par l'addition d'un agent mouillant, la tension superficielle selon la norme DIN 55660 du mélange est réglée dans la plage de 10 à 72 dyn, de préférence dans la plage de 15 à 60 dyn et/ou dans la plage de 20 à 68 dyn.

7. Procédé selon l'une ou plusieurs des revendications précédentes, **caractérisé en ce qu'**on règle un degré de réticulation dans la plage de 4,7^{∗}10⁻⁵ à 1,9^{∗}10⁻¹, de préférence de 2,3^{∗}10⁻⁴ à 1,3^{∗}10⁻¹, en particulier de 4,7^{∗}10⁻⁴ à 4,9^{∗}10⁻².

8. Procédé selon l'une ou plusieurs des revendications précédentes, **caractérisé en ce que** le monomère ou oligomère polymérisable est choisi dans le groupe constitué par : l'acide acrylique, l'acide méthacrylique, les amides, les acides vinylsulfoniques et leurs mélanges.

9. Procédé selon l'une ou plusieurs des revendications précédentes, **caractérisé en ce qu'**un superabsorbant est formé par la polymérisation dans l'étape de procédé b).

10. Procédé selon l'une ou plusieurs des revendications précédentes, comprenant l'utilisation de la structure plane textile fabriquée par le procédé pour empêcher la pénétration et la propagation d'eau dans des câbles.

11. Procédé selon l'une ou plusieurs des revendications précédentes, comprenant l'utilisation de la structure plane textile fabriquée par le procédé comme élément d'étanchéité d'espaces creux dans des câbles de données, de signaux, de fibres de verre et de télécommunication et des câbles pour la transmission d'énergie.

12. Procédé selon l'une ou plusieurs des revendications précédentes, comprenant l'utilisation de la structure plane textile fabriquée par le procédé sous forme de bande et/ou tournée en un fil comme étanchéité le long des canaux ouverts dans des câbles individuels, des faisceaux de câbles et/ou entre des couches de câbles et/ou comme gaine de couches individuelles de câbles.

13. Procédé selon l'une ou plusieurs des revendications précédentes, comprenant l'utilisation de la structure plane textile fabriquée par le procédé comme élément d'étanchéité d'espaces creux dans et/ou sur le conducteur, sur et/ou sous le blindage, dans et/ou sur et/ou sous l'armature de câbles pour la transmission d'énergie.

14. Procédé selon l'une ou plusieurs des revendications précédentes, comprenant l'utilisation de la structure plane textile fabriquée par le procédé sur et/ou sous les éléments de blindage de câbles et/ou dans la zone des conducteurs comme gaine du noyau conducteur et/ou dans un ou plusieurs des segments conducteurs d'un conducteur segmenté et/ou dans le noyau conducteur ou les segments conducteurs, découpée en bandes et/ou tournée en un fil comme étanchéité le long des canaux ouverts dans la zone des conducteurs.
